(19) Europäisches Patentamt
European Patent Office
Office européen des brevets

(11) **EP 4 342 050 B1**

(12) **EUROPÄISCHE PATENTSCHRIFT**

(45) Veröffentlichungstag und Bekanntmachung des Hinweises auf die Patenterteilung:
**16.10.2024 Patentblatt 2024/42**

(21) Anmeldenummer: **22750809.0**

(22) Anmeldetag: **12.07.2022**

(51) Internationale Patentklassifikation (IPC):
*H02J 3/26* (2006.01)      *H02J 3/38* (2006.01)
*H02J 3/48* (2006.01)

(52) Gemeinsame Patentklassifikation (CPC):
**H02J 3/48; H02J 3/26; H02J 3/381;** H02J 2203/10

(86) Internationale Anmeldenummer:
**PCT/EP2022/069418**

(87) Internationale Veröffentlichungsnummer:
**WO 2023/285439 (19.01.2023 Gazette 2023/03)**

(54) **VERFAHREN ZUR REGELUNG ELEKTRISCHER NETZGRÖSSEN IN EINEM EINSPEISENETZWERK**

METHOD FOR CONTROLLING ELECTRICAL NETWORK VARIABLES IN A FEED NETWORK

PROCÉDÉ DE RÉGULATION DE LA TAILLE DU RÉSEAU ÉLECTRIQUE DANS UN RÉSEAU D'ALIMENTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.07.2021 EP 21185638**

(43) Veröffentlichungstag der Anmeldung:
**27.03.2024 Patentblatt 2024/13**

(73) Patentinhaber: **FRONIUS INTERNATIONAL GmbH**
**4643 Pettenbach (AT)**

(72) Erfinder:
• **BARTEL, Daniel**
**4600 Wels-Thalheim (AT)**
• **GRASBÖCK, Richard**
**4600 Wels-Thalheim (AT)**
• **KREUZER, Harald**
**4600 Wels-Thalheim (AT)**
• **PIELER, Roland**
**4600 Wels-Thalheim (AT)**

(74) Vertreter: **Patentanwälte Pinter & Weiss OG**
**Prinz-Eugen-Straße 70**
**1040 Wien (AT)**

(56) Entgegenhaltungen:
**EP-A1- 3 376 026        EP-A1- 3 429 050**
**DE-A1- 102018 116 444   DE-A1- 102018 129 810**

**Beschreibung**

Die gegenständliche Erfindung betrifft ein Verfahren zur Regelung elektrischer Netzgrößen an einem Netzanschlusspunkt an einem Ausgang eines Einspeisenetzwerks, welches an einem Eingang des Einspeisenetzwerks an einem Stromrichteranschlusspunkt mit zumindest einem Stromrichter verbunden wird, wobei am Stromrichteranschlusspunkt zumindest eine Einspeisegröße und am Netzanschlusspunkt zumindest eine Netzgröße gemessen werden.

Die stete Zunahme dezentral erzeugter Energie im Energiemix gegenwärtiger Energieversorgungssysteme führt zu vielfältigen neuen Aufgabenstellungen in den Bereichen der Netzregulierung und des Einspeisemanagements. So stellt insbesondere die Volatilität erneuerbarer Energieträger die Betreiber von dezentralen Energieerzeugungsanlagen vielfach vor die Aufgabe, einerseits mit Erzeugungs- und damit einhergehenden Angebotsspitzen, andererseits mit Erzeugungs- und damit einhergehenden Angebotstälern umzugehen. Neben der Abfederung von Angebotsspitzen und/oder -tälern rücken vermehrt auch Wirtschaftlichkeitsbetrachtungen bei der Planung von Betriebs- und/oder Einspeisestrategien für dezentrale Energieerzeugungsanlagen in den Fokus. So soll oftmals nur im Fall zufriedenstellender Strompreise eingespeist werden bzw. die abgegebene Energiemenge an die Entwicklung von Strompreisen angepasst werden.

Zur näheren Betrachtung dieses Themenfelds wird zunächst eine Definition der Begriffe "Einspeisenetzwerk" und "Verteilnetz" vorgenommen. Unter einem Einspeisenetzwerk werden im gegenständlichen Zusammenhang die am Ort einer dezentralen Energieerzeugungsanlage gegebenen elektrotechnischen Betriebsmittel, wie Leiter, Kabel oder Phasenwender, verstanden, die die zum Betrieb der dezentralen Energieerzeugungsanlage nötigen elektrotechnischen Vorrichtungen miteinander verbinden. Unter einem Verteilnetz wird demgegenüber ein üblicherweise von einem Netzbetreiber bereitgestelltes Stromnetz aus den Bereichen der Hoch-, Mittel- und Niederspannung aufgefasst, welches vielfach Leitungen mit einer kumulativen Länge von mehreren hundert Kilometern umfasst und üblicherweise eine Vielzahl von Energieerzeugungsanlagen mit einer Vielzahl von Verbrauchern verbindet.

Eine erste Problemstellung ergibt sich in diesem Themenfeld oft aus dem Umstand, dass die Eigenschaften von elektrischen Leistungsgrößen, wie elektrischem Strom, elektrischer Spannung oder elektrischer Leistung, die bei einer Einspeisung an ein Verteilnetz abgegeben werden, üblicherweise nicht zur Gänze im Ermessen eines Kraftwerksbetreibers liegen. So sind unter anderem Spannungs- und/oder Frequenzbereich von eingespeisten Leistungsgrößen in vielen Fällen streng reglementiert. Daneben werden vonseiten der Netzbetreiber aufgrund von möglichen Erzeugungsspitzen vermehrt Mechanismen zur Einspeisebegrenzung gefordert, die beispielsweise beim Betrieb von Photovoltaik-Anlagen (PV-Anlagen) vorzusehen sind. Neben einer Begrenzung der eingespeisten Energiemenge kann hierbei auch die Einspeisung oder die Entnahme einer konkreten Energiemenge gefordert sein. Besonders hervorzuheben ist diesbezüglich die sogenannte Nulleinspeisung, bei der phasenaufgelöst keine Energie an ein Verteilnetz abgegeben werden darf.

Um derartige Forderungen im Rahmen einer Betriebs- und/oder Einspeisestrategie für eine dezentrale Energieerzeugungsanlage umzusetzen, ist es üblicherweise nötig, insbesondere die Topologie eines am Anschlussort gegebenen, lokalen Einspeisenetzwerks in ausreichender Genauigkeit zu berücksichtigen. Darüber hinaus sind an ein lokales Einspeisenetzwerk neben einer dezentralen Energieerzeugungsanlage vielfach auch lokale Verbraucher im Haushalt oder Gebäude des Anschlussortes angeschlossen. Lokale Verbraucher können dabei je nach Anwendungsfall durch elektrische Alltagsgeräte gegeben sein, wie Mikrowellen, Waschmaschinen und Kühlschränke, oder auch durch Vorrichtungen mit hohem Energiebedarf, wie Werkzeugmaschinen oder Fertigungsstraßen. Bei der Planung einer geeigneten Betriebs- und/oder Einspeisestrategie kann es in derartigen Fällen vorteilhaft sein, neben der Netzwerktopologie auch die lokalen Verbraucher zu berücksichtigen, insbesondere wenn wesentliche Teile der lokal erzeugten Energie unmittelbar von lokalen Verbrauchern konsumiert werden können. Sowohl zur Berücksichtigung der Topologie eines am Anschlussort gegebenen, lokalen Einspeisenetzwerks als auch zur Berücksichtigung von lokalen Verbrauchern werden typischerweise (mathematische) Modelle von Netzwerktopologie und/oder (lokalen) Verbrauchern eingesetzt.

Neben der Berücksichtigung von Netzwerktopologie und lokalen Verbrauchern spielt bei der Entwicklung von Betriebs- und/oder Einspeisestrategien für dezentrale Energieerzeugungsanlagen oft auch deren Adaptionsfähigkeit auf Änderungen eines Einspeisenetzwerks eine wesentliche Rolle. So kann sich die Netzwerktopologie am Anschlussort durch eine Modifikation der Verkabelung, beispielsweise im Zuge von Wartungs- und/oder Umbauarbeiten, teils grundlegend ändern. Bei Neuinbetriebnahmen ist es überdies oft von Vorteil, ein neues und damit meist unbekanntes Einspeisenetzwerk rasch und ohne großen Aufwand identifizieren zu können. Weiters können zu- und/oder weggeschaltete lokale Verbraucher während des Betriebs zu Abweichungen von einer bei der Planung einer Betriebs- und/oder Einspeisestrategie angenommenen Nominalsituation führen, worauf eine geeignete Adaption ebenso notwendig werden kann.

Die gegenständliche Erfindung geht insbesondere auf diese Problemstellungen näher ein, wobei der Fokus auf Einspeisenetzwerke gerichtet wird, an die zumindest ein Stromrichter und zumindest eine Messeinrichtung angeschlossen sind. Daneben können optional auch ein oder mehrere lokale Verbraucher angeschlossen sein. Der Stromrichter kann dabei durch einen Wechselrichter gegeben sein, der von einer Energieerzeugungsanlage, wie einer PV-Anlage, einem Batteriespeicher oder einer Brennstoffzelle, zunächst als Gleichgrößen erzeugte elektrischen Leistungsgrößen wechselrichtet, um diese dem meist als Wechselstromnetz gegebenen Einspeisenetzwerk zuzuführen. Auch Umrichter sind in diesem Zusammenhang als mögliche Realisierungsform eines Stromrichters denkbar, beispielsweise um die Frequenz einer bereits als Wechselgröße vorliegenden, einzuspeisenden Leistungsgröße genau auf die Anforderungen eines Netzbetreibers anzupassen. Ein lokaler Verbraucher kann im gegenständlichen Zusammenhang zumindest einen Teil der bereitgestellten Energie bereits am Ort der Erzeugung verbrauchen, und die zumindest eine Messeinrichtung erlaubt es üblicherweise, die letztlich an ein Verteilnetz abgegebenen Leistungsgrößen messtechnisch zu erfassen. Zwischen Stromrichter und Messeinrichtung können im Rahmen der gegenständlichen Ausführungen noch weitere elektrische Betriebsmittel vorgesehen sein, wie Transformatoren, Umrichter oder auch Phasenwender. Eine grundlegende Änderung des Einspeisenetzwerks, in Folge derer eine Adaption einer Betriebs- und/oder Einspeisestrategie erforderlich werden kann, kann dabei durch verschiedene Vorgänge herbeigeführt werden, eine Änderung des Transformator-Übersetzungsverhältnisses oder ein Umschlagen eines Phasenwenders sind dafür nur auszugsweise Beispiele.

Die Notwendigkeit, Betriebs- und/oder Einspeisestrategien für den Betrieb dezentraler Energieversorgungsanlage auf ein gegebenes Einspeisenetzwerk abzustimmen, ist im Stand der Technik bekannt. Da derartige Betriebs- und/oder Einspeisestrategien üblicherweise auf einer modellhaften und zumeist mathematischen Beschreibung eines Einspeisenetzwerks basieren, finden sich im Stand der Technik mehrere Druckschriften, die sich mit der Identifikation von Modellen zur Beschreibung von Einspeisenetzwerken befassen.

Die DE 102014200412 A1 offenbart in diesem Zusammenhang eine Methode zur Identifikation eines Modells in Form einer Zuordnung der Phasen am Anschlusspunkt eines Stromrichters mit den Phasen am als Netzübergabepunkt bezeichneten Anschlusspunkt eines elektrischen Verteilnetzes. Wie diese Identifikation im Detail erfolgt, ist in der DE102014200412 A1 nicht offenbart. Es wird nur allgemein beschrieben, dass dazu aktiv ein Pilotsignal in Form eines Teststroms in das elektrische Netzwerk eingeprägt werden kann.

Die DE 102018124124 B3 offenbart ebenfalls eine Methode zur Identifikation der Zuordnung der Phasen am Anschlusspunkt eines schieflastfähigen Gerätes, das einen Stromrichter darstellen kann, mit den Phasen am Anschlusspunkt eines Detektionsgerätes. Zur Identifikation wird dabei durch das schieflastfähige Gerät aktiv ein Schieflastprofil eingeprägt, das mit durch die Detektionseinheit erfassten Messungen verglichen wird. Von diesem Vergleich wird in weiterer Folge eine Phasenzuordnung abgeleitet.

Die DE 10 2018 116444 A1 lehrt weiters ein Verfahren zum Steuern eines Windparks, bei dem ein Netzmodell kontinuierlich angepasst wird, das zur Auslegung eines Dämpfungsreglers eingesetzt wird.

Die EP 3 429 050 A1 lehrt weiters ein Verfahren zur Regelung einer Wirkleistung in einem Windpark mit mindestens zwei Windenergieanlagen, deren Leistungsabgabe durch jeweils einen Windenergieanlagenregler geregelt wird, wobei eine Aufteileinheit einen Sollwert der von dem Windpark abzugebenden Wirkleistung auf Wirkleistungssollwerte zum Simulieren in Modellen der in dem Windpark enthaltenen Windenergieanlagen aufteilt.

Die DE 10 2018 129810 A1 lehrt weiters ein Verfahren zur Steuerung von zu einem virtuellen Kraftwerk zusammengefassten energieeinspeisenden Einheiten, wobei Stellgrößen für die Steuerung der Einheiten mittels eines konvexen Optimierungs-Modells berechnet werden.

Die EP 3 376 026 A1 lehrt weiters ein Verfahren zur Regelung einer Wirkleistung in einem Windpark mit mindestens zwei Windenergieanlagen, deren Leistungsabgabe durch jeweils einen Windenergieanlagenregler geregelt wird, wobei ein Sollwert der von dem Windpark abzugebenden Wirkleistung an einem Windparkmodell anliegt, das einen modellierten Wirkleistungssollwert des Windparks erzeugt.

Ein erster Nachteil der zitierten Druckschriften ist, dass zur Identifikation eines Modells stets aktiv Pilot- bzw. Testsignale in das zu identifizierende elektrische Netzwerk eingeleitet werden müssen. Diese Voraussetzung kann die praktische Anwendbarkeit von auf derartigen Ansätzen aufbauenden Einspeisestrategien deutlich einschränken, da durch die aktive Einspeisung von Testsignalen der Normalbetrieb merklich gestört werden kann. Abgesehen davon verursacht das Einspeisen auch zusätzlichen Schaltungsaufwand. Ein zweiter Nachteil der zitierten Druckschriften ist durch den Umstand gegeben, dass unbekannte, und damit insbesondere auch temporär zu- oder weggeschaltete, Verbraucher und deren Wirkung auf das Verhalten eines zu identifizierenden elektrischen Netzwerkes nicht in die Identifikation und damit in der Folge auch nicht in darauf aufbauende Betriebs- und/oder Einspeisestrategien miteinbezogen werden. Ein weiterer Nachteil der aus dem Stand der Technik bekannten Ansätze ergibt sich aus einer mangelnden Adaptionsfähigkeit der vorgestellten Konzepte. Dabei sind entscheidende Fragen, wann und wie ein gegebenes Modell eines Einspeisenetzwerkes adaptiert werden soll, um auch im Fall von Änderungen eines Einspeisenetzwerkes, insbesondere während des Betriebs, eine hohe Betriebsqualität sicherzustellen. Diese Fragen bleiben im Stand der Technik unbeantwortet. Darüber hinaus geht aus dem Stand der Technik nicht hervor, wie ein gegebenenfalls auch mehrfach adaptiertes Modell eines Einspeisenetzwerks vorteilhaft in eine Betriebsstrategie integriert werden soll.

Es ist deshalb Aufgabe der gegenständlichen Erfindung, das Betriebsverhalten eines Einspeisenetzwerks, an welches zumindest ein Stromrichter, zumindest eine Messeinrichtung und optional ein oder mehrere Verbraucher angeschlossen sind, zu verbessern.

Diese Aufgabe wird erfindungsgemäß durch die Merkmale der unabhängigen Ansprüche gelöst, wobei auf zwei Verfahrensschritte zur Sollwertbildung und Regelung von in einem Einspeisenetzwerk vorherrschenden Leistungsgrößen und eine gegebenenfalls mehrfach durchgeführte Adaption eines Modells des Einspeisenetzwerks zurückgegriffen wird.

Konkret wird im Rahmen der gegenständlichen Erfindung von einem Einspeisenetzwerk ausgegangen, welches an einem Eingang des Einspeisenetzwerks an einem Stromrichteranschlusspunkt mit zumindest einem Stromrichter verbunden wird, wobei am Stromrichteranschlusspunkt zumindest eine Einspeisegröße und an einem Netzanschlusspunkt an einem Ausgang des Einspeisenetzwerks zumindest eine Netzgröße gemessen werden. Der Netzanschlusspunkt stellt dabei einerseits einen Anschlusspunkt für eine Messeinrichtung zur Messung von Netzgrößen als auch einen Anschlusspunkt für ein Verteilnetz dar. Bevorzugt werden am Stromrichteranschlusspunkt jedoch nicht nur insgesamt eine, sondern je Phase eine Einspeisegröße gemessen. Selbiges gilt für die Messung von Netzgrößen am Netzanschlusspunkt durch eine zu diesem Zweck angeschlossene Messeinrichtung. Konkret werden unter Einspeisegröße und Netzgröße elektrische Leistungsgrößen wie elektrischer Strom, elektrische Spannung oder elektrische Leistung, verstanden, die an ihrer Bezeichnung entsprechenden, unterschiedlichen Stellen des Einspeisenetzwerkes vorherrschen. Wesentliches und zentrales Element der gegenständlichen Erfindung ist ein Modell des Einspeisenetzwerks, anhand dessen das Einspeisenetzwerk und damit die Korrelation bzw. der Zusammenhang zwischen den am Anschlusspunkt des Stromrichters vorherrschenden Einspeisegrößen und den am Anschlusspunkt der Messeinrichtung vorherrschenden Netzgrößen modellhaft beschrieben wird. Das Modell des Einspeisenetzwerks ist erfindungsgemäß in einer Steuereinheit des Einspeisenetzwerks implementiert.

Als Modell des Einspeisenetzwerks wird dabei bevorzugt auf ein mathematisches Modell zurückgegriffen, das beispielsweise durch eine algebraische Abbildung oder ein Differentialgleichungssystem gegeben sein kann. Zur Umsetzung des erfindungsgemäßen Verfahrens können allerdings auch nicht-mathematische Modelle herangezogen werden, wie beispielsweise eine Tabelle, die eine Phasenzuordnung an unterschiedlichen Punkten des Einspeisenetzwerks beschreibt. Ein besonderer Vorteil der erfindungsgemäßen modellhaften Beschreibung liegt darin, dass die erfindungsgemäß eingesetzten Modelle derart gestaltet sind, dass die Berücksichtigung von optionalen und überdies üblicherweise unbekannten Verbrauchern als Teil des Modells ohne Zusatzaufwand möglich wird.

Erfindungsgemäß werden in einem Verfahrensschritt zur Sollwertbildung mittels des genannten Modells des Einspeisenetzwerks aus vorgegebenen Sollwerten für die Netzgrößen, nachfolgend auch "Netzgrößen-Sollwerte", in der Steuereinheit Sollwerte für die vom zumindest einen Stromrichter einzuregelnden Einspeisegrößen, nachfolgend auch "Einspeisegrößen-Sollwerte", ermittelt. Da als Stellgrößen zur Regelung bzw. Einstellung von Leistungsgrößen im Rahmen der gegenständlichen Erfindung vom Stromrichter vorgebbare elektrische Größen eingesetzt werden, wie beispielsweise die an seinen Anschlüssen vom Stromrichter einprägbaren elektrischen Ströme, vereinfacht diese Transformation von Sollwerten insbesondere die Streckendynamik zwischen Stell- und Regelgrößen. Da die Ermittlung der Einspeisegrößen-Sollwerte bevorzugt während des Betriebs des Einspeisenetzwerks durchgeführt wird, ist im Fall einer Adaption des Modells bereits anhand dieses Verfahrensschrittes geklärt, wie ein gegebenenfalls auch während des Betriebs adaptiertes Modell vorteilhaft in eine Betriebsstrategie eines Einspeisenetzwerks eingebunden werden kann.

In einem weiteren Verfahrensschritt zur Regelung werden die gegebenen Einspeisegrößen mithilfe des Stromrichters auf die ermittelten Einspeisegrößen-Sollwerte eingestellt bzw. eingeregelt, was bei korrekter Ermittlung der Einspeisegrößen-Sollwerte aus den Netzgrößen-Sollwerten dazu führt, dass die Netzgrößen den für sie vorgegebenen Netzgrößen-Sollwerten nachgeführt werden. Eine korrekte Ermittlung der Einspeisegrößen-Sollwerte wird dabei sichergestellt, wenn das Modell des Einspeisenetzwerks das reale Einspeisenetzwerk korrekt und akkurat beschreibt. Mit einer korrekten und akkuraten Beschreibung des realen Einspeisenetzwerks ist hierbei insbesondere eine korrekte und akkurate Beschreibung der Korrelation von Netzgrößen und Einspeisegrößen gemeint.

Um auch im Fall von Änderungen des Einspeisenetzwerks eine korrekte und akkurate Beschreibung des Einspeisenetzwerks durch das eingesetzte Modell des Einspeisenetzwerks zu gewährleisten, ist erfindungsgemäß vorgesehen, im Fall einer Abweichung zwischen gemessenen Netzgrößen und aufgrund des Modells des Einspeisenetzwerks zu erwartenden Netzgrößen und/oder im Fall einer Abweichung zwischen gemessenen Einspeisegrößen und aufgrund des Modells des Einspeisenetzwerks zu erwartenden Einspeisegrößen das Modell des Einspeisenetzwerks zu adaptieren bzw. das Modell des Einspeisenetzwerks gegebenenfalls gänzlich neu zu identifizieren, wobei zur Adaption bzw. Neuidentifikation des Modells des Einspeisenetzwerks zumindest ein Teil der erfassten Messdaten der Einspeisegrößen und zumindest ein Teil der erfassten Messdaten der Netzgrößen herangezogen werden. Erfindungsgemäß wird diese Adaption in der Steuereinheit durchgeführt.

Im Fall wiederkehrender Änderungen des Einspeisenetzwerks wird eine Adaption bzw. Neuidentifikation des Modells des Einspeisenetzwerks gegebenenfalls auch mehrfach durchgeführt. Dabei ist entscheidend, dass das erfindungsgemäße Verfahren keine Test- bzw. Pilotsignale zur Identifikation benötigt. Im Gegenteil erkennt das erfindungsgemäße Verfahren von selbst, wann und ob eine Adaption bzw. Neuidentifikation des Modells des Einspeisenetzwerks durchzuführen ist.

In einer bevorzugten Ausgestaltung des erfindungsgemäßen Verfahrens wird eine Abweichung zwischen gemessenen Netzgrößen und aufgrund des Modells des Einspeisenetzwerks zu erwartenden Netzgrößen und damit eine fehlerhafte Beschreibung der Korrelation zwischen den am Anschlusspunkt des Stromrichters vorherrschenden Einspeisegrößen und den am Anschlusspunkt der Messeinrichtung vorherrschenden Netzgrößen erkannt und eine Adaption des Modells des Einspeisenetzwerks durchgeführt, wenn die Abweichung zwischen zumindest einem Messwert einer Netzgröße und einem mittels des Modells des Einspeisenetzwerks berechneten Schätzwert der entsprechenden Netzgröße einen vorgegebenen Schwellwert übersteigt. Analog kann bei einem Vergleich von gemessenen Einspeisegrößen mit vom Modell des Einspeisenetzwerks berechneten Schätzwerten der Einspeisegrößen vorgegangen werden. Ebenso kann die Abweichung zwischen zwei Messwerten von zwei verschiedenen Zeitpunkten zumindest einer Netzgröße oder zumindest einer Einspeisegröße mit einem vorgegebenen Schwellwert verglichen werden, und eine Adaption des Modells des Einspeisenetzwerks durchgeführt werden, wenn die Abweichung zwischen den verglichenen Werten einen vorgegebenen Schwellwert übersteigt.

In einer bevorzugten Ausgestaltung des erfindungsgemäßen Verfahrens wird als Schwellwert zur Detektion einer fehlerhaften Beschreibung der Korrelation ein Relativwert eines zur Ermittlung der Abweichung herangezogenen Messwertes zumindest einer Einspeisegröße oder zumindest einer Netzgröße verwendet, wobei als Relativwert beispielsweise 10% oder 50% oder 100% verwendet werden können.

In einer weiteren bevorzugten Ausgestaltung des erfindungsgemäßen Verfahrens wird als Schwellwert zur Detektion einer fehlerhaften Beschreibung der Korrelation ein Absolutwert eines zur Ermittlung der Abweichung herangezogenen Messwertes zumindest einer Einspeisegröße oder zumindest einer Netzgröße verwendet, wobei als Absolutwert im Fall von Leistungen beispielsweise 10W oder 50W oder 100W, oder im Fall von Strömen beispielsweise 10A oder 50A oder 100A, oder im Fall von Spannungen beispielsweise 10V oder 50V oder 100V verwendet werden können.

Durch die gegenständliche Erfindung kann neben den bereits genannten Vorteilen überdies erreicht werden, dass ein gemäß der Erfindung ermitteltes Modell eines Einspeisenetzwerks automatisch auch Informationen über optional vorhandene Verbraucher liefern kann. Insbesondere in Fällen, in denen das elektrische Einspeisenetzwerk zumindest einen unbekannten elektrischen Verbraucher umfasst, welcher zumindest eine elektrische Verbrauchsgröße im elektrischen Einspeisenetzwerk hervorruft, kann der zumindest eine elektrische Verbraucher sowie die von ihm hervorgerufene Verbrauchsgröße im Modell des Einspeisenetzwerks abgebildet werden und somit bei der Ermittlung des zumindest einen Sollwertes für die zumindest eine elektrische Einspeisegröße sowie bei der Adaption des Modells des Einspeisenetzwerks berücksichtigt werden.

Um im Fall einer fehlerhaften Beschreibung des Einspeisenetzwerks durch das Modell noch vor der Durchführung der vorgestellten Verfahrensschritte zur Sollwertbildung und zur Regelung eine Modelladaption und damit eine Korrektur des Modells durchzuführen, kann eine Modelladaption besonders vorteilhaft auch vor den beiden vorgestellten Verfahrensschritten zur Sollwertbildung und Regelung durchgeführt werden. Vorteilhafterweise werden sämtliche Verfahrensschritte und damit auch die vorgestellte Modelladaption während des Betriebs des Einspeisenetzwerks durchgeführt, was insbesondere Betriebsunterbrechungen und damit einhergehende Beeinträchtigungen vermeidet und demnach eine besonders vorteilhafte Ausführungsform des erfindungsgemäßen Verfahrens darstellt.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt

Fig.1 ein dreiphasiges Einspeisenetzwerk mit Stromrichter, Messeinrichtung und optionalen Verbrauchern

Fig. 2 ein Flussdiagramm des erfindungsgemäßen Verfahrens

Fig. 3 einen Stromverlauf bei Phasenwendung.

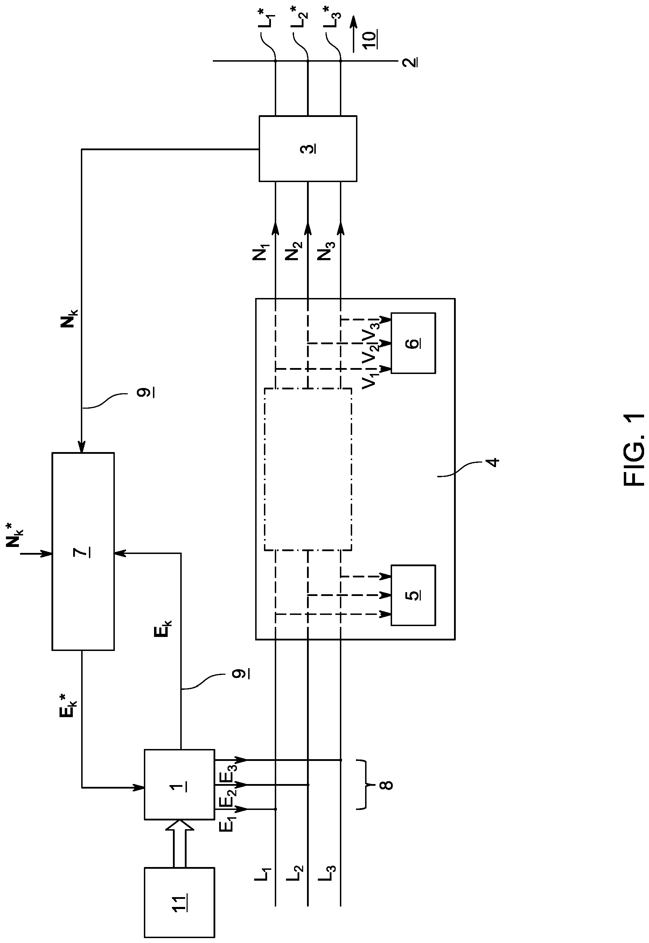

Fig. 1 zeigt dabei zunächst ein Einspeisenetzwerk 4, einen Stromrichter 1 und eine Messeinrichtung 3. Die weiters in Fig. 1 dargestellten Verbraucher 5, 6 sind als optional zu betrachten und stellen für die Anwendung des erfindungsgemäßen Verfahrens keine zwingende Voraussetzung dar. Der Stromrichter 1 ist in bevorzugter Weise durch einen Wechselrichter gegeben, wie eingangs erwähnt ist im gegenständlichen Zusammenhang diesbezüglich aber auch ein Umrichter möglich. Weiters zeigt Fig. 1 einen Netzanschlusspunkt 2, über den das Einspeisenetzwerk 4 mit einem Verteilnetz 10 verbunden werden kann und der elektrisch gleichwertig mit dem Anschlusspunkt der Messeinrichtung 3 ist, einen Stromrichteranschlusspunkt 8, um einen Stromrichter 1 an das Einspeisenetzwerk 4 anzuschließen, und eine Steuereinheit 7. Wie eingangs erwähnt, können im Einspeisenetzwerk 4, wie durch die strich-punktierte Box im Inneren des Einspeisenetzwerks 4 angedeutet, verschiedene elektrische Betriebsmittel vorgesehen sein, wie ein Transformator oder ein Phasenwender, die insbesondere zu Beginn des Betriebs des Einspeisenetzwerks 4 unbekannt sein können und/oder sich im Lauf des Betriebs ändern können. Zur besseren Unterscheidung von Einspeisenetzwerk 4 und Verteilnetz 10 sind in Fig. 1 die Phasen des Einspeisenetzwerks 4 als $L_1$, $L_2$, $L_3$ bezeichnet, jene des Verteilnetzes 10, an das das Einspeisenetzwerk 4 angeschlossen ist, als $L_1^*, L_2^*, L_3^*$. Die Darstellung des beispielhaften Einspeisenetzwerks 4 in Fig. 1 anhand dreier Phasen liegt in der vielfach üblichen Umsetzung von Drehstromsystemen als dreiphasige Systeme begründet. Obwohl der Einsatz des erfindungsgemäßen Verfahrens bei dreiphasigen Wechselstromsystemen eine bevorzugte Anwendung darstellt, ist das erfindungsgemäße Verfahren keinesfalls darauf beschränkt. Von einphasigen Wechselstromsystemen bis hin zu schieflastfähigen Multiphasen-Netzen kann das erfindungsgemäße Verfahren gleichermaßen eingesetzt werden.

Weiters zeigt Fig. 1 am Stromrichteranschlusspunkt 8 pro Phase eine Einspeisegröße $E_x$, am Netzanschlusspunkt 2 pro Phase eine Netzgröße $N_x$ und zwischen Einspeisenetzwerk 4 und Messeinrichtung 3 in den Abzweigungen zu den optionalen Verbrauchern 6 pro Phase eine Verbrauchsgröße $V_x$. Die Laufvariable $x$ steht hierbei für den Index der Phasen $L_1$, $L_2$, $L_3$. Im Rahmen der nachfolgenden Ausführungen wird an mehreren Stellen zur gesammelten Betrachtung mehrerer Einspeise-, Netz- und Verbrauchsgrößen auf die vektorwertigen Größen $\boldsymbol{E}$, $\boldsymbol{N}$ und $\boldsymbol{V}$ zurückgegriffen, welche zur Unterscheidung mit den skalaren $E_x$, $N_x$ und $V_x$ fett notiert werden. Werden als Einspeisegrößen beispielsweise die am Stromrichteranschlusspunkt 8 vorherrschenden Phasenströme $i_{Ex}$ betrachtet, gilt in diesem Sinn

$$\boldsymbol{E} = \begin{pmatrix} \mathrm{E}_1 \\ \mathrm{E}_2 \\ \mathrm{E}_3 \end{pmatrix} = \begin{pmatrix} i_{E1} \\ i_{E2} \\ i_{E3} \end{pmatrix}.$$

Im Zuge der nachfolgenden Ausführungen ist vielfach eine Zuordnung der genannten Größen $\boldsymbol{E}$, $\boldsymbol{N}$ und $\boldsymbol{V}$ zu diskreten Zeitpunkten vorteilhaft, wofür nachfolgend der diskrete Zeitindex $k$ herangezogen wird. Wie in der Digitaltechnik üblich, kann der Zeitindex $k$ dabei bevorzugt äquidistant voneinander entfernte Zeitpunkte $t_k$ beschreiben, die sich, wie hinlänglich bekannt, aus einem Startzeitpunkt $t_0$ und einer diskreten Abtastzeit $T_a$ durch die Vorschrift $t_k = t_o + k \cdot T_a$ ergeben können. In diesem Sinn würde der Vektor

$$\boldsymbol{E}_k = \begin{pmatrix} \mathrm{E}_{1,k} \\ \mathrm{E}_{2,k} \\ \mathrm{E}_{3,k} \end{pmatrix} = \begin{pmatrix} i_{E1,k} \\ i_{E2,k} \\ i_{E3,k} \end{pmatrix}$$

die zu einem Zeitpunkt $t_k$ am Stromrichteranschlusspunkt 8 vorherrschenden Phasenströme $i_{E1,k}$, $i_{E2,k}$ und $i_{E3,k}$ zusammenfassen. Diesbezüglich ist anzumerken, dass die nachfolgende, zeitdiskrete Betrachtung nur als beispielhaft zu sehen ist, und dass zur Beschreibung des erfindungsgemäßen Verfahrens ebenso zeitkontinuierliche Größen verwendet werden könnten. Die für das erfindungsgemäße Verfahren wesentlichen Sollwerte für Netzgrößen $N_{x,k}$ und Einspeisegrößen $E_{x,k}$ werden nachfolgend mittels $N_{x,k}^*$ bzw. $E_{x,k}^*$ notiert, vektoriell wird dementsprechend die Notation $\boldsymbol{E}_k^*$ bzw. $\boldsymbol{N}_k^*$ verwendet. Netzgrößen-Sollwerte $N_{x,k}^*$ werden hierbei vielfach extern vorgegeben, was in Fig. 1 durch den von oben in die Steuereinheit 7 eingehenden Signalpfad, welcher einen Vektor von Netzgrößen-Sollwerten $\boldsymbol{N}_k^*$ an die Steuereinheit 7 übergibt, gezeigt ist, beispielsweise um zu erfüllende Einspeiserichtlinien zu erfüllen. Wie ebenso in Fig. 1 dargestellt, werden von der Steuereinheit 7 Messwerte der Netzgrößen $N_{x,k}$ und der Einspeisegrößen $E_{x,k}$ über ein Bussystem 9 eingelesen. Da dabei bevorzugt eine Mehrzahl von gemessenen Netzgrößen $N_{x,k}$ und Einspeisegrößen $E_{x,k}$ eingelesen wird, sind die von der Steuereinheit 7 eingelesenen Signale vektoriell fett notiert. In der in Fig. 1 dargestellten Ausführungsform gibt die Steuereinheit überdies einen Vektor von Einspeisegrößen-Sollwerten $\boldsymbol{E}_k^*$ aus.

Es sei in diesem Zusammenhang erwähnt, dass zur Durchführung des erfindungsgemäßen Verfahrens zumindest eine Netzgröße $N_{x,k}$ und zumindest eine Einspeisegröße $E_{x,k}$ als Messgrößen benötigt werden. Die Verwendung nur einer Netzgröße $N_{x,k}$ und nur einer Einspeisegröße $E_{x,k}$ stellt hierbei jedoch eine Minimalrealisierung dar. In einer vorteilhaften Weise werden demnach pro Phase des Einspeisenetzwerks 4 am Stromrichteranschlusspunkt 8 je eine Einspeisegröße $E_{x,k}$ und pro Phase des Einspeisenetzwerks 4 am Netzanschlusspunkt 2 je eine Netzgröße $N_{x,k}$ gemessen. Hinsichtlich der vektoriellen Notation sei hierbei allerdings angemerkt, dass die verwendeten vektoriellen Größen $\boldsymbol{E}_k$, $\boldsymbol{N}_k$ und $\boldsymbol{V}_k$ auch nur ein Element beinhalten können und damit auch den Fall, dass je nur eine Einspeisegröße $E_{x,k}$, Netzgröße $N_{x,k}$ und Verbrauchsgröße $V_{x,k}$ verwendet werden, abdecken.

In der in Fig. 1 dargestellten Situation ist der Stromrichter 1 mit einer Energieerzeugungsanlage 11 verbunden, beispielsweise mit einer PV-Anlage oder einem Brennstoffzellensystem, die den Stromrichter 1 zunächst mit elektrischen Gleichgrößen versorgt. Da es sich sowohl bei Einspeisenetzwerken 4 als auch bei Verteilnetzen 10 üblicherweise um Wechselstromnetze handelt, kann es erforderlich sein, derartige Gleichgrößen vor ihrer Einspeisung in Wechselgrößen zu wandeln. Eine weitere wichtige Ausführungsform einer Energieerzeugungsanlage 11 ist durch sogenannte unterbrechungsfreie Stromversorgungen gegeben, mit deren Hilfe im Fall von Ausfällen eines Verteilnetzes 10 ein lokales elektrisches Netzwerk aus einem stationären elektrischen Speicher (Batterie, Wasserstoffbrennstoffzelle usw.) üblicherweise zunächst ebenfalls mit Gleichgrößen versorgt werden kann. In vielen Anwendungsfällen können darüber hinaus neben einem ersten Stromrichter 1 noch weitere Stromrichter an das Einspeisenetzwerk 4 angeschlossen sein. Die Anwendbarkeit des erfindungsgemäßen Verfahrens wird dadurch nicht eingeschränkt, gegebenenfalls stellt eine Einspeisegröße $E_{x,k}$ in diesem Fall allerdings eine Summe über mehrere Einspeisegrößen von mehreren, einzelnen Stromrichtern 1 dar, was mit der Anzahl $n_E$ von Stromrichtern 1 als

$$E_{x,k} = \sum_{j=1}^{n_E} E_{x,k,j}$$

dargestellt werden kann. Auch für einen Stromrichter 1 gilt im Rahmen der gegenständlichen Anmeldung, dass er hinsichtlich der Anzahl der von ihm versorgten Phasen variabel gestaltet sein kann. So kann das erfindungsgemäße Verfahren auch in Situationen angewandt werden, in denen ein-, zwei-, drei- oder auch mehrphasige Stromrichter vorgesehen sind bzw. auch kombiniert werden.

Die in Fig. 1 dargestellten, optionalen und üblicherweise unbekannten Verbraucher 5, 6 können je nach konkretem Anwendungsfall verschiedenste elektrische Geräte und/oder Vorrichtungen umfassen. Im Fall einer PV-Anlage, die einen Haushalt mit elektrischer Energie versorgt und über ein Einspeisenetzwerk 4 auch in ein Verteilnetz 10 einspeisen kann, können die Verbraucher 5 und 6 elektrische Alltagsgeräte wie Mikrowellen, Waschmaschinen oder auch Kühlschränke repräsentieren. Ist ein wie in Fig. 1 dargestelltes Einspeisenetzwerk 4 Teil eines Industriekomplexes, sind anstelle der oder auch zusätzlich zu den erwähnten Alltagsgeräten auch Vorrichtungen mit hohem Energiebedarf, wie Werkzeugmaschinen oder ganze Fertigungsstraßen denkbar. Das erfindungsgemäße Verfahren kann in diesem Zusammenhang ungeachtet der konkreten Gestalt der unbekannten Verbraucher 5, 6 eingesetzt werden. Auch könnten die optionalen Verbraucher 5, 6 Erzeuger sein, die keine elektrische Energie aus dem Einspeisenetzwerk 4 entnehmen, sondern selbst elektrische Energie an das Einspeisenetzwerk 4 abgegeben.

In einer vorteilhaften Ausführung wird dem erfindungsgemäßen Verfahren hinsichtlich der Position der optionalen Verbraucher 5, 6 die Annahme zugrunde gelegt, dass sämtliche Verbraucher 5, 6 entweder am Ausgang des Einspeisenetzwerks 4, wie der Verbraucher 6, oder am Eingang des Einspeisenetzwerks 4, wie der Verbraucher 5, angeschlossen sind. Für die Anwendung der gegenständlichen Erfindung spielt keine Rolle, ob die Verbraucher 5, 6 auf den Eingang oder den Ausgang des Einspeisenetzwerks 4 bezogen werden. Werden sämtliche Verbraucher auf den Eingang des Einspeisenetzwerks 4 bezogen, spricht man von Verbrauchern 5, 6 im "Stromrichtersystem", bei einem Bezug auf den Ausgang des Einspeisenetzwerks 4 von Verbrauchern 5, 6 im "Zählersystem". Dieser Schritt hat zur Folge, dass auch die Verbrauchsgrößen $V_{x,k}$ als auf eine Seite bezogen berechnet werden, was für die Umsetzung des Verfahrens eine große Vereinfachung darstellt. Für das Ziel des erfindungsgemäßen Verfahrens, an ein Verteilnetz 10 abgegebene Netzgrößen $N_{x,k}$ korrekt einzuregeln, ist es dabei unerheblich, ob die berücksichtigten Verbrauchsgrößen $V_{x,k}$ in einem dementsprechenden Stromrichter- oder Zählersystem dargestellt sind. Da überdies in vielen Fällen bereits die bloße Anzahl der optional angeschlossenen Verbraucher 5, 6 unbekannt ist, ist es weiters oft von Vorteil, sämtliche auf nur einer Seite des Einspeisenetzwerks 4 angenommenen Verbraucher 5, 6 mit nur einem einzelnen, kumulativen Verbraucher 6 zu repräsentieren. Die Wirkung potentiell vieler Verbraucher auf ein Einspeisenetzwerk 4 kann so anhand konzentrierter Verbrauchsgrößen $V_{x,k}$ angegeben werden, für die analog zur Betrachtung mehrerer Stromrichter 1

$$V_{x,k} = \sum_{j=1}^{n_V} V_{x,k,j}$$

angesetzt werden kann, wobei $n_V$ für die Anzahl von Verbrauchern steht.

Auch für das in Fig. 1 gezeigte Einspeisenetzwerk 4 gilt, dass seine konkrete Ausführung und Topologie in einem starken Maß von der konkreten Anwendung abhängen kann. Für das erfindungsgemäße Verfahren stellen insbesondere Transformatoren, Umrichter und Phasenwender typische elektrische Betriebsmittel dar, die im Einspeisenetzwerk 4 vorgesehen sein können. Sollen entsprechend der gegenständlichen Erfindung vom Stromrichter 1 am Stromrichteranschlusspunkt 8 die dort vorherrschenden Einspeisegrößen $E_{x,k}$ so geregelt werden, dass am Netzanschlusspunkt 2 die dort vorherrschenden Netzgrößen $N_{x,k}$ bestimmte vorgegebene Netzgrößen-Sollwerte $N_{x,k}^*$ annehmen, werden Änderungen des Einspeisenetzwerks 4, beispielsweise in Form einer Änderung eines Transformatorübersetzungsverhältnisses oder einer Änderung der Phasenzuordnung zwischen Stromrichteranschlusspunkt 8 und Netzanschlusspunkt 2, erfindungsgemäß durch eine Anpassung eines bevorzugt mathematischen Modell des Einspeisenetzwerks 4 berücksichtigt.

Für ein derartiges Modells eines Einspeisenetzwerks 4 kann in vielen Fällen bereits eine algebraische Abbildung ausreichend sein, welche mit einer Matrix $A_n$ beispielsweise in Form eines linearen Gleichungssystems in Form von

$$A_n \cdot E_k + V_k = N_k$$

angeschrieben werden kann und die Korrelation zwischen dem Vektor von Einspeisegrößen $E_k$ und dem Vektor von Netzgrößen $N_k$ beschreibt. Die optionalen Verbraucher $V_k$ sind hierbei in einem Zählersystem angenommen. Zeigt sich, dass keine Verbraucher 5, 6 gegeben sind, kann dies durch die Zuweisung von $V_k = 0$ mit einem Nullvektor **0** passender Dimension einfach berücksichtigt werden.

Der Modellindex $n$ bei der nachfolgend auch als Modell-Matrix bezeichneten Matrix $A_n$ bringt dabei zum Ausdruck, dass sich ein Modell eines Einspeisenetzwerks 4 und damit im gegenständlichen Fall die Modell-Matrix $A_n$ ändern kann. Da erfindungsgemäß jedoch nicht zu jedem Zeitpunkt $k$ eine Adaption und damit eine Änderung eines Modells in Form einer Modell-Matrix $A_n$ erfolgt, sind der Zeitindex $k$ und der Modellindex $n$ im Allgemeinen unterschiedlich. Die im Rahmen der gegenständlichen Erfindung vorgesehene Umrechnung eines Vektors von Netzgrößen-Sollwerten $N_k{}^*$ auf einen Vektor von Einspeisegrößen-Sollwerten $E_k{}^*$ kann anhand dieses Modells durch die Abbildung

$$E_k{}^* = A_n{}^{-1}(N_k{}^* - V_k)$$

erfolgen. Der Vektor der Einspeisegrößen $E_k$ kann in der Folge bevorzugt mithilfe des Stromrichters 1 auf diesen Vektor von Einspeisegrößen-Sollwerten $E_k{}^*$ eingestellt bzw. eingeregelt werden, wofür wiederum verschiedenste Methoden der Regelungs- und/oder Steuerungstechnik herangezogen werden können. Im Fall eines sich im Einspeisenetzwerk 4 befindenden Transformators kann die Modell-Matrix $A_n$ die Form

$$A_n = \begin{pmatrix} z & 0 & 0 \\ 0 & z & 0 \\ 0 & 0 & z \end{pmatrix}$$

annehmen, mit welcher mittels des sich auf der Hauptdiagonale der Matrix befindenden Transformator-Übersetzungsverhältnisses $z$ beispielsweise eine Umrechnung von Phasenströmen von der Seite des Stromrichters 1 auf die Seite der Messeinrichtung 3 durchgeführt werden kann. Auch ein Umrichter könnte so abgebildet werden. Im Fall eines sich in einem dreiphasigen Einspeisenetzwerk 4 befindenden Phasenwenders kann eine algebraische Abbildung durch die Matrix

$$A_n = \begin{pmatrix} 0 & 1 & 0 \\ 1 & 0 & 0 \\ 0 & 0 & 1 \end{pmatrix}$$

gegeben sein, mit der im konkreten Fall ein Tausch der Phasen $L_1$ und $L_2$ vorgenommen werden kann.

Wird für ein Modell des Einspeisenetzwerks 4 in der oben dargestellten Form eine fehlerhafte Beschreibung der Korrelation zwischen Einspeisegrößenvektor $E_k$ und Netzgrößenvektor $N_k$ erkannt, wird das Modell des Einspeisenetzwerks 4 adaptiert. Im Fall der gegenständlichen Modell-Matrix $A_n$ kann das eine Zuweisung neuer Werte an die Elemente der Modell-Matrix $A_n$ bedeuten. Für diesen Schritt kann auf mehrere Methoden zurückgegriffen werden. In einer vorteilhaften Weise kann das gegenständliche Modell des Einspeisenetzwerks 4 dafür zunächst in sogenannten homogenen Koordinaten als

$$\underbrace{\begin{pmatrix} A_n & V_k \\ 0_E & 1 \end{pmatrix}}_{H_k} \underbrace{\begin{bmatrix} E_k \\ 1 \end{bmatrix}}_{X_k} = \underbrace{\begin{bmatrix} N_k \\ 1 \end{bmatrix}}_{Y_k}$$

angeschrieben werden. Darin stellt der Vektor $0_E$ einen Nullvektor dar, dessen Länge der Spaltenzahl der Matrix $A_n$ entspricht. Die matrix- bzw. vektorwertigen Größen $H_k$, $X_k$, $Y_k$ dienen hierbei einer kompakteren Schreibweise des gegenständlichen Modells. Eine Adaption bzw. auch eine Neuidentifikation des Modells des Einspeisenetzwerks 4 kann im gegebenen Fall durch eine Ermittlung einer geeigneten Matrix $H_k$ umgesetzt werden. In dieser Ausführungsform ist besonders vorteilhaft, dass bei einer Identifikation der Matrix $H_k$ neben der Matrix $A_n$ automatisch auch die zu einem Zeitpunkt $t_k$ gegebenen optionalen Verbraucher $V_k$ mitidentifiziert werden. Unter Verwendung der Messdaten der Einspeisegrößen $E_k$ und der Netzgrößen $N_k$ kann im Sinne eines Least-Squares-Ansatzes (LS-Ansatz) die Matrix $H_k$ bei-

spielsweise ermittelt werden, indem ein optimaler Wert $\hat{H}_k$ gesucht wird, der die Kostenfunktion

$$J_k = \left|\left|Y_k - H_k X_k\right|\right|_2^2 = (Y_k - H_k X_k)^T (Y_k - H_k X_k)$$

minimiert, wobei der Operator $\left|\left|\cdot\right|\right|_2^2$ der wohlbekannten 2-Norm entspricht. Bevorzugt wird dazu die erste Ableitung der Kostenfunktion $J_k$ nach der Matrix $H_k$ zu Null gesetzt und der entstehende Ausdruck auf die Matrix $H_k$ aufgelöst. Diese Vorgehensweise führt zunächst zu

$$\frac{d}{dH_k} J_k = \frac{d}{dH_k} \left|\left|Y_k - H_k X_k\right|\right|_2^2 = -2 Y_k X_k{}^T + 2 H_k \left(X_k X_k{}^T\right) \overset{!}{=} 0,$$

woraus ein im Sinne der gegenständlichen 2-Norm optimaler Schätzwert $\hat{H}_k$ in Form von

$$\widehat{H}_k = Y_k X_k{}^T \left(X_k X_k{}^T\right)^{-1}$$

bestimmt werden kann. Wie aus der Fachliteratur bekannt ist, muss die in der Matrix $\hat{H}_k$ enthaltene Matrix $\widehat{A_n}_k$ nicht zwingend direkt in eine neue Modell-Matrix $A_{n+1}$ übernommen werden und eine gegebene Matrix $A_n$ demnach gänzlich mit $\widehat{A_n}_k$ überschrieben werden. Vielmehr kann eine Modell-Matrix $A_n$ auch schrittweise verändert werden, beispielsweise indem von einem Ergebnis entsprechend der oben dargestellten Berechnung nur ein Anteil zum aktuellen $A_n$ addiert wird, was unter anderem in Form von

$$A_{n+1} = (1 - \mu) \cdot A_n + \mu \cdot \widehat{A_n}_k$$

mit dem zwischen null und eins liegenden Gewichtsfaktor $\mu$ umgesetzt werden kann. Derartige Ansätze sind in der einschlägigen Literatur insbesondere als sogenannte Least-Squares- oder Minimum-Mean-Square-Error-Schätzer ("LS-Algorithmen", "MMSE-Schätzer") bekannt.

Durch diese Herangehensweise ergibt sich auch unmittelbar eine Möglichkeit, wie während des Betriebs ohne Zusatzaufwand erkannt werden kann, ob eine fehlerhafte Beschreibung der Korrelation zwischen den Einspeisegrößen $E_k$ und den Netzgröße $N_k$ durch das Modell des Einspeisenetzwerks 4 gegeben ist und ob demnach eine Adaption des Modells erforderlich wird. So kann unter anderem der Wert der gegenständlichen Kostenfunktion $J_k$ während des Betriebs fortlaufend, beispielsweise zu durch den diskreten Zeitindex $k$ beschriebenen diskreten Zeitpunkten $t_k$ während der Durchführung des erfindungsgemäßen Verfahrens, berechnet werden. Die Kostenfunktion $J_k$ kann jedoch auch nur an einem Teil der während der Durchführung des erfindungsgemäßen Verfahrens auftretenden Zeitpunkte berechnet werden. Wird erkannt, dass die Kostenfunktion $J_k$ eine vorgebbare Schwelle $J^*$ überschreitet, kann eine Adaption gemäß der vorgestellten Herangehensweise durchgeführt werden.

Eine weitere Ausführungsform der gezeigten Herangehensweise ergibt sich aus einer interessanten Interpretation der Kostenfunktion $J_k = \left|\left|Y_k - H_k X_k\right|\right|_2^2$. Wird der Ausdruck $A_n \cdot E_k + V_k$ für den Fall, dass für $E_k$ die zum Zeitpunkt $t_k$ für die Einspeisegrößen $E_k$ verfügbaren Messgrößen und für $V_k$ die zum Zeitpunkt $t_k$ verfügbaren Schätzwerte der gegebenenfalls vorhandenen Verbrauchsgrößen eingesetzt werden, als Schätzwert $\tilde{N}_k = A_n \cdot E_k + V_k$ für die am Ausgang des Einspeisenetzwerks 4 gegebenen Netzgrößen $N_k$ betrachtet, kann die Kostenfunktion auch angesehen werden als die Abweichung zwischen den tatsächlich gemessenen Messwerten $N_k$ der Netzgrößen und von wie beschrieben ermittelten Schätzwerten $\tilde{N}_k$, also

$$J_k = \left|\left|\begin{bmatrix} N_k \\ 1 \end{bmatrix} - \begin{bmatrix} \tilde{N}_k \\ 1 \end{bmatrix}\right|\right|_2^2 .$$

Umgekehrt können in diesem Sinn ausgehend von den gemessenen Netzgrößen $N_k$ auch Schätzwerte $\tilde{E}_k$ für die Einspeisegrößen $E_k$ ermittelt werden, bevorzugt anhand der Inversen der Modell-Matrix $A_n$ wie bei der Berechnung von Einspeisegröße-Sollwerten aus Netzgrößen-Sollwerten in der Form von. $\tilde{E}_k = A_n^{-1}(N_k - V_k)$. Damit kann unmittelbar

$$J_k = \left\| \begin{bmatrix} E_k \\ 1 \end{bmatrix} - \begin{bmatrix} \tilde{E}_k \\ 1 \end{bmatrix} \right\|_2^2$$

eine weitere Kostenfunktion in der Form von angegeben werden, die anhand des Modells ermittelte Schätzwerte der Einspeisegrößen $\tilde{E}_k$ mit tatsächlichen Messwerten der Einspeisegrößen $E_k$ vergleicht. Ist wie zuvor die resultierende Abweichung zwischen Schätzwerten und Messwerten und damit der Wert der Kostenfunktion $J_k$ größer als eine vorgebbare Schwelle $J^*$, kann eine Adaption des Modells durchgeführt werden. Eine fehlerhafte Beschreibung der Korrelation zwischen Einspeisegrößen $E_k$ und Netzgrößen $N_k$ kann demnach beispielsweise erkannt werden, indem die Abweichung von gemessenen Netzgrößen $N_k$ oder Einspeisegrößen $E_k$ mit geschätzten Netzgrößen $\tilde{N}_k$ oder Einspeisegrößen $\tilde{E}_k$ betrachtet wird.

Das Modell des Einspeisenetzwerks 4 kann neben einer rein algebraischen Abbildung auch dynamische Elemente umfassen, die beispielsweise durch ein System gewöhnlicher Differentialgleichungen beschrieben werden können und die Berücksichtigung von eventuell vorhandenen Energiespeichern, wie Spulen oder Kondensatoren, erlauben können. In derartigen Fällen kann bei einer erfindungsgemäßen Neuidentifikation auch der dynamische Anteil eines Modells berücksichtigt werden. Die konkrete Umsetzung des Identifikationsvorganges hängt in diesen Fällen von der konkreten Ausführung des Modells ab.

Für eine Vielzahl von Identifikationsverfahren wird bekanntermaßen eine ausreichende Menge bzw. Anzahl von Messwerten ("persistence of excitation") von bekannten Ein- und Ausgängen des zu identifizierenden Systems bzw. im Fall von unbekannten Ein- und Ausgängen Systems ausreichende statistische Informationen von diesen benötigt.

Wie für die anderen in Fig. 1 gezeigten Netzwerkkomponenten gilt auch für die Messeinrichtung 3, dass zu deren Umsetzung mehrere Ausführungsformen denkbar sind, beispielhaft ein sogenannter intelligenter Zähler ("smart meter"). Unabhängig von der konkreten Ausführung der Messeinrichtung 3 ist für das erfindungsgemäße Verfahren wesentlich, dass die von der Messeinrichtung 3 erfassten Messwerte der Netzgrößen $N_{x,k}$ für eine Steuereinheit 7, auf der die erfindungsgemäßen Verfahrensschritte ausgeführt werden, zugänglich sind. Selbiges gilt für Messungen der am Stromrichteranschlusspunkt 8 vorherrschenden Einspeisegrößen $E_{x,k}$, deren Messung in einer bevorzugten Ausführungsform direkt durch den Stromrichter 1 selbst erfolgt. Erlaubt der Stromrichter 1 keine direkte Messung der Einspeisegrößen $E_{x,k}$, kann auch am Stromrichteranschlusspunkt 8 eine geeignete weitere Messeinrichtung vorgesehen sein. Auch eine rechnerische Ableitung der Einspeisegrößen $E_{x,k}$ aus anderen bekannten Messgrößen ist denkbar.

Die Bereitstellung der erfassten Messwerte an die Steuereinheit 7 erfolgt in bevorzugter Weise durch eine geeignete Datenkommunikationsverbindung, beispielsweise durch Datenübertragung mittels eines Bussystems 9, das zumindest Stromrichter 1, Messsystem 3 und Steuereinheit 7 miteinander verbindet. Unter einem Bussystem 9 wird dabei ein System zur Datenübertragung zwischen mehreren Teilnehmern über einen gemeinsamen Übertragungsweg verstanden, wobei bei der konkreten Umsetzung auf viele im Stand der Technik bekannte Standards zurückgegriffen werden kann. Insbesondere für Feldbussysteme, die für gegenständlichen Zweck besonders geeignet sind, existiert eine Reihe von möglichen Ausführungen, wie Profibus, Profinet oder EtherCAT. Auch eine drahtlose Datenkommunikationsverbindung zur Datenübertragung, beispielsweise über einen Mobilfunkstandard, ist denkbar.

Entsprechend der in Fig. 1 gezeigten Ausführung ist die Steuereinheit 7 ein wesentlicher Bestandteil bei der Umsetzung des erfindungsgemäßen Verfahrens. Die Steuereinheit 7 stellt dabei Hardware dar bzw. kann in einer existierenden Hardware integriert werden, die die Ausführung von Programmen für einen aus dem erfindungsgemäßen Verfahren hervorgehenden Zweck ermöglicht. Mögliche Realisierungen derartiger Einheiten sind dabei unter anderem durch mikroprozessorbasierte Hardware, Mikrocontroller und integrierte Schaltungen (ASIC, FPGA) gegeben.

Eine praktische Realisierung des erfindungsgemäßen Verfahrens kann allerdings auch verteilt erfolgen, wobei mehrere Steuereinheiten 7 miteinander verbunden werden. Im konkreten Beispiel des in Fig. 1 gezeigten Einspeisenetzwerks 4 ist es auch denkbar, die erfindungsgemäßen Verfahrensschritte auf einen Stromrichter 1, eine Messeinheit 3 und die Steuereinheit 7 aufzuteilen. In einer weiteren möglichen Ausführungsform kann die Steuereinheit 7 auch Teil des Stromrichters 1 oder der Messeinrichtung 3 sein. Werden die erfindungsgemäßen Verfahrensschritte beispielsweise auf einen Stromrichter 1 und eine vom Stromrichter 1 externe Steuereinheit 7 aufgeteilt, kann der vom Stromrichter 1 einzustellende Vektor der Einspeisegrößen-Sollwerte $E_k^*$ von der Steuereinheit 7 ermittelt und an den Stromrichter übermittelt werden. In einer vorteilhaften Ausführungsform können von der Steuereinheit 7 an den Stromrichter 1 allerdings auch ein gegebenenfalls adaptiertes Modell des Einspeisenetzwerks und ein Vektor von Netzgrößen-Sollwerte $N_k^*$ übermittelt werden und die Berechnung des Vektors von Einspeisegrößen-Sollwerten $E_k^*$ erst im Stromrichter 1 durchgeführt werden.

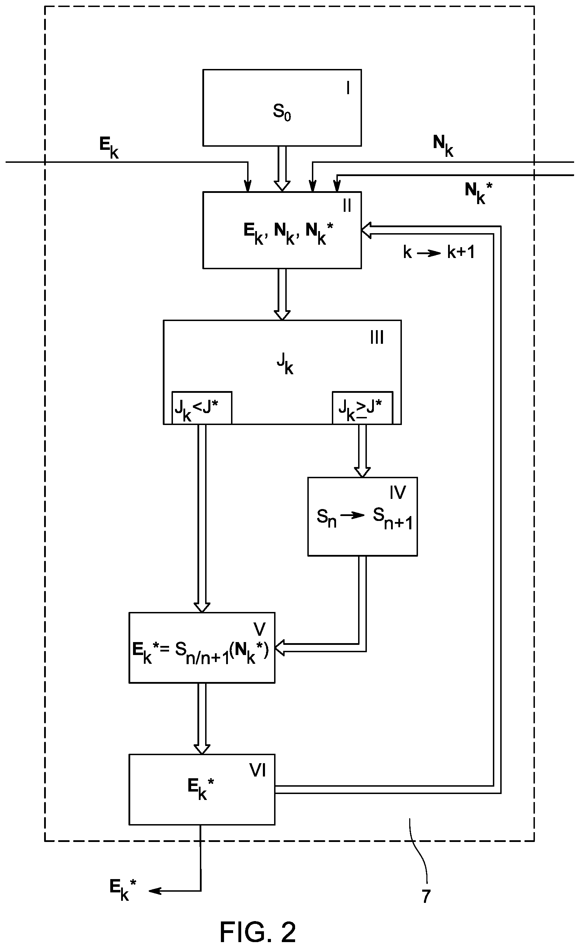

Eine mögliche Umsetzung der erfindungsgemäßen Verfahrensschritte in der Steuereinheit 7 ist in Fig. 2 in Form eines Flussdiagramms dargestellt. Das Modell des Einspeisenetzwerks 4 wird dabei mit 5 bezeichnet, und kann wie bereits ausgeführt eine Transformationsmatrix $A$ oder auch ein dynamisches Modell in Form eines Differenzialgleichungssystems beinhalten.

In Schritt I des Flussdiagramms wird zu Beginn des Verfahrens, also für den Zeitindex $k$ = 0, das Modell des Einspeisenetzwerks 4 mit einem Initialisierungsmodell $S_0$ initialisiert. Dazu kann beispielsweise auf vorhandenes Vorwissen über das Einspeisenetzwerk 4 zurückgegriffen werden, was für eine erfolgreiche Anwendung des erfindungsgemäßen Verfahrens allerdings nicht notwendig ist. Im Fall einer Modellbeschreibung durch eine Transformationsmatrix kann diese zu Beginn des Verfahrens beispielsweise als

$$A_0 = \begin{pmatrix} 1 & 0 & 0 \\ 0 & 1 & 0 \\ 0 & 0 & 1 \end{pmatrix}$$

gewählt werden, also gleich einer passend dimensionierten Einheitsmatrix. "Passend dimensioniert" ist im gegenständlichen Zusammenhang zu verstehen als eine Dimensionierung der Matrix $A_0$, bei der Zeilen- und Spaltenzahl der Anzahl der Phasen des Einspeisenetzwerks 4 entsprechen. Dadurch wird insbesondere eine Matrix-Vektor-Multiplikation der Matrix $A_0$ mit dem Einspeisegrößenvektor $E_k$ möglich. Eine derartige Initialisierung wird nachfolgend auch als "Initialisierung mit einem neutralen Element" bezeichnet. Neben einem neutralen Element kann das Modell des Einspeisenetzwerks 4 auch mit einem bereits a priori, also schon vor Beginn des Verfahrens, bekannten Modell initialisiert werden. Diesbezüglich sind insbesondere die Möglichkeiten, eine bereits bekannte Phasenzuordnung mittels einer Matrix $A_0$ oder ein bekanntes Transformatorübersetzungsverhältnis mittels einer Matrix $A_0$ vorzugeben, zu nennen. Sind Verbraucher vorhanden, kann auch Vorwissen über den ungefähren Verbrauch zu einer Initialisierung verwendet werden. So kann beispielsweise zu Verfahrensbeginn, wo meist noch nicht eingespeist wird und deshalb $E_0$ = **0** gilt, aus den Messwerten der Netzgrößen $N_0$ auf die anfänglichen Verbraucher geschlossen $V_0$ werden, die in diesen Fällen üblicherweise den Verbrauchsgrößen $V_0$ entsprechen.

In Schritt II des Flussdiagramms werden die zum gegebenen Zeitpunkt $t_k$ aktuellen Messwerte der gegenständlich vektoriell notierten Einspeisegrößen $E_k$ und Netzgrößen $N_k$ und die vorgegebenen Netzgrößen-Sollwerte $N_k^*$ eingelesen. Die Netzgrößen-Sollwerte $N_k^*$ werden dabei beispielsweise von einer Datenschnittstelle, einer Steuerleitung, einer Berechnungseinheit, einem Datenspeicher mit abgespeichertem Fixwert, usw. eingelesen. Es sei an dieser Stelle angemerkt, dass die konkreten Zeitpunkte, an denen die Messwerte der Einspeisegrößen $E_k$ im Stromrichter 1 und die Messwerte der Netzgrößen $N_k$ in der Messeinrichtung 3 tatsächlich erfasst werden, voneinander abweichen können. Mögliche Gründe dafür sind unterschiedliche Abtastraten von Stromrichter 1 und Messeinrichtung 3 oder ein asynchroner Betrieb von Stromrichter 1 und Messeinrichtung 3. Für die Umsetzung des erfindungsgemäßen Verfahrens stellt das keine Einschränkung dar.

In Schritt III des Flussdiagramms wird der zum Zeitpunkt $t_k$ gültige Wert der Kostenfunktion $J_k$ ermittelt. Dazu kann die vorhin vorgestellte Vorgehensweise herangezogen werden oder auch auf andere Ansätze zurückgegriffen werden.

Ergibt die Ermittlung von $J_k$ einen Wert unter der vorgegebenen Schwelle $J^*$, wird in Schritt V mit der erfindungsgemäßen Berechnung von Einspeisegrößen-Sollwerten $E_k^*$ als Funktion des Modells $S_n$ aus den in Schritt II eingelesenen Netzgrößen-Sollwerten $N_k^*$ fortgefahren.

Liegt der ermittelte Wert von $J_k$ hingegen über der Schwelle $J^*$, wird in Schritt IV noch vor Schritt V des Flussdiagramms eine Adaption bzw. Neuidentifikation des Modells $S_n$ durchgeführt. Diese Anpassung des Modells wird anhand der Änderung im Index $S_n$ zu $S_{n+1}$ dargestellt. Der Modellindex $n$ ist an dieser Stelle klar vom Zeitindex $k$ zu unterscheiden, da üblicherweise bei weitem nicht zu jedem Zeitpunkt $k$ eine Modelladaption durchgeführt wird.

Da die beschriebene Ermittlung der Einspeisegrößen-Sollwerte $E_k^*$ in Schritt V von der konkreten Gestalt des Modells $S_n$ abhängt, und dieses sich gegebenenfalls in Schritt IV geändert haben kann, ist anhand der Darstellung der zwei möglichen Indizes $n$ und $n$ + 1 die Möglichkeit einer Änderung des Modells $S_n$ angedeutet.

Schritt VI des Flussdiagramms sieht die Umsetzung der zuvor ermittelten Einspeisegrößen-Sollwerte $E_k^*$ vor, also das Einstellen bzw. Einregeln von physikalischen Einspeisegrößen $E_k$ auf die ermittelten Einspeisegrößen-Sollwerte $E_k^*$. Erfolgt dieser Schritt, wie zuvor anhand Fig. 1 erklärt, in einem Stromrichter 1, kann es erforderlich sein, die ermittelten Einspeisegrößen-Sollwerte $E_k^*$ von der Steuereinheit 7 an den Stromrichter 1 zu übermitteln, was in Fig. 2 durch den unter Block VI aus der Steuereinheit herausgeführten Signalpfeil angedeutet ist.

Anschließend, d.h. zum folgenden Zeitpunkt $t_{k+1}$, wird der nächste Schleifendurchlauf mit Schritt II des Flussdiagramms begonnen.

Wie aus den vorangegangenen Ausführungen hervorgeht, spielt für die Umsetzung des erfindungsgemäßen Verfahrens die Feststellung, wann und ob eine fehlerhafte Beschreibung der Korrelation zwischen der zumindest einen Einspeisegröße $E_{x,k}$ und der zumindest einen Netzgröße $N_{x,k}$ durch das Modell des Einspeisenetzwerks 4 gegeben ist und ob demnach eine Adaption des Modells des Einspeisenetzwerks 4 durchgeführt werden sollte, eine entscheidende Rolle. Neben der bereits vorgestellten Überwachung der auf der 2-Norm beruhenden Kostenfunktion $J_k$ wird nachfolgend eine weitere diesbezügliche Möglichkeit dargestellt.

Konkret wird dazu ein Vergleich von Messwerten der Netzgrößen $N_k$ und der Einspeisegrößen $E_k$ mit Messwerten der Netzgrößen $N_{k-d}$ und der Einspeisegrößen $E_{k-d}$ aus einem vorangegangenen Zeitpunkt $t_{k-d}$ herangezogen. Um diese Überlegung auf eine numerisch fassbare Kostenfunktion zu übertragen, kann beispielsweise der Ansatz $J_k = |E_k - E_{k-d}|^2 + |N_k - N_{k-d}|^2$ gemacht werden, womit wie vorhin ein Vergleich mit einer vorgegebenen Schwelle $J^*$ durchgeführt werden kann. Vorzugsweise werden hier die zum unmittelbar vorhergehenden Zeitpunkt $k - 1$ verfügbaren Messwerte herangezogen, also $d = 1$ gewählt. Der Grundgedanke hinter diesem Ansatz ist, dass schlagartige / sprunghafte / signifikante Änderungen von Netzgrößen $N_k$ und/oder Einspeisegrößen $E_k$ als Indiz für eine Änderung des Einspeisenetzwerks 4 aufgefasst werden können. Hat sich das zu modellierende Einspeisenetzwerks 4 demnach geändert, kann es erforderlich sein, das Modell des Einspeisenetzwerks 4 daran anzupassen.

In vielen Fällen ist es in diesem Zusammenhang vorteilhaft, die Werte einer Kostenfunktion $J_k$ vor dem Vergleich mit einer Schwelle $J^*$ noch zu mitteln oder einer Tiefpassfilterung zu unterziehen, um beispielsweise den Einfluss eines in der Praxis stets gegebenen Messrauschens zu reduzieren.

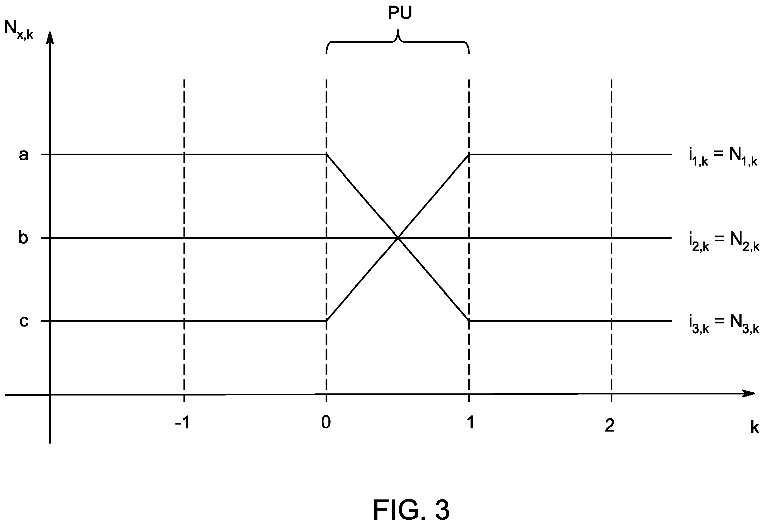

Die Gedanken hinter der Betrachtung von schlagartigen / sprunghaften / signifikanten Änderungen von Netzgrößen $N_k$ und/oder Einspeisegrößen $E_k$ zwischen zwei Zeitschritten werden in Fig. 3 anhand eines möglichen Verlaufs dreier Phasenströme näher dargestellt. Die Ströme $i_{1,k}$, $i_{2,k}$ und $i_{3,k}$ stehen dabei beispielhaft für in den Phasen eines dreiphasigen Einspeisenetzwerks 4 mögliche Netzgrößen $N_{1,k}$, $N_{2,k}$ und $N_{3,k}$. Die Wirkung einer zwischen den Zeitindizes $k = 0$ und $k = 1$ stattfindenden Phasenumschaltung PU beispielsweise auf die Kostenfunktion $J_k = |N_k - N_{k-1}|^2$ kann dabei unmittelbar abgelesen werden. Für den Zeitindex $k = 0$ ergibt sich mit den Werten $a$, $b$ und $c$ für die Netzgrößen $N_{1,k}$, $N_{2,k}$ und $N_{3,k}$ die Kostenfunktion

$$J_0 = \left(i_{1,0} - i_{1,-1}\right)^2 + \left(i_{2,0} - i_{2,-1}\right)^2 + \left(i_{3,0} - i_{3,-1}\right)^2$$

$$= (c - c)^2 + (b - b)^2 + (a - a)^2 = 0$$

Zum Zeitindex $k = 1$ ändern sich die Verhältnisse aufgrund der Phasenumschaltung PU jedoch grundlegend, was hinsichtlich der Kostenfunktion zu

$$J_1 = \left(i_{1,1} - i_{1,0}\right)^2 + \left(i_{2,1} - i_{2,0}\right)^2 + \left(i_{3,1} - i_{3,0}\right)^2$$

$$= (a - c)^2 + (b - b)^2 + (c - a)^2 = 2(a - c)^2$$

führt.

In einer vorteilhaften Ausführungsform des erfindungsgemäßen Verfahrens kann auch der Schwellwert $J^*$ während des Betriebs angepasst werden. So kann der vorgegebene Schwellwert beispielsweise 10%, 50% oder auch 100% zumindest eines zur Ermittlung der Kostenfunktion berücksichtigten Messwertes einer Einspeisegröße $E_{x,k}$ oder der einer Netzgröße $N_{x,k}$ betragen. In diesem Fall ist der Schwellwert also ein Relativwert. Fordert beispielsweise die Netzgröße allerdings eine Nulleinspeisung, kann als Schwellwert ein Absolutwert verwendet werden, beispielsweise 100W oder 0,5A.

In einer weiteren bevorzugten Ausführungsform des erfindungsgemäßen Verfahrens kann überdies die Kostenfunktion $J_k$ nicht mit einem festen Schwellwert $J^*$ verglichen, sondern seine prozentuelle Änderung betrachtet werden. So kann in einer bevorzugten Ausführungsform eine Neuidentifikation des Modells des Einspeisenetzwerks 4 stets dann durchgeführt werden, wenn sich der Wert der Kostenfunktion $J_k$ im Vergleich zum vorhergehenden Zeitschritt um zumindest 10%, bevorzugt 50% und höchstbevorzugt 100% ändert.

**Patentansprüche**

1. Verfahren zur Regelung elektrischer Netzgrößen ($N_{x,k}$) an einem Netzanschlusspunkt (2) an einem Ausgang eines Einspeisenetzwerks (4), welches an einem Eingang des Einspeisenetzwerks (4) an einem Stromrichteranschlusspunkt (8) mit zumindest einem Stromrichter (1) verbunden wird, wobei am Stromrichteranschlusspunkt (8) zumindest eine Einspeisegröße ($E_{x,k}$) und am Netzanschlusspunkt (2) zumindest eine Netzgröße ($N_{x,k}$) gemessen werden, **dadurch gekennzeichnet, dass** die Korrelation zwischen der zumindest einen Einspeisegröße ($E_{x,k}$) und der zumindest einen Netzgröße ($N_{x,k}$) mittels eines Modells des Einspeisenetzwerks (4) modellhaft beschrieben wird, wobei das Modell des Einspeisenetzwerks (4) in einer Steuereinheit (7) des Einspeisenetzwerks (4) implementiert wird, **dass**

- im Fall einer Abweichung der gemessenen zumindest einen Netzgröße ($N_{x,k}$) von einer aufgrund des Modells des Einspeisenetzwerks (4) zu erwartenden Netzgröße ($\tilde{N}_{x,k}$) und/oder einer Abweichung der gemessenen zumindest einen Einspeisegröße ($E_{x,k}$) von einer aufgrund des Modells des Einspeisenetzwerks (4) zu erwartenden Einspeisegröße ($\tilde{E}_{x,k}$) durch die Steuereinheit (7) eine fehlerhafte Beschreibung der Korrelation erkannt wird und durch die Steuereinheit (7) eine Adaption des Modells des Einspeisenetzwerks (4) durchgeführt wird, um die fehlerhafte Beschreibung der Korrelation durch das Modell des Einspeisenetzwerks (4) zu korrigieren, wobei zur Adaption des Modells des Einspeisenetzwerks (4) zumindest ein Teil der erfassten Messdaten der zumindest einen Einspeisegröße ($E_{x,k}$) und zumindest ein Teil der erfassten Messdaten der zumindest einen Netzgröße ($N_{x,k}$) herangezogen werden,

- **dass** durch die Steuereinheit (7) anhand des Modells des Einspeisenetzwerks (4) aus einem vorgegebenen Netzgrößen-Sollwert ($N_{x,k}$*) für die zumindest eine Netzgröße ($N_{x,k}$) ein Einspeisegrößen-Sollwert ($E_{x,k}$*) für die zumindest eine Einspeisegröße ($E_{x,k}$) ermittelt wird,

- **und dass** die zumindest eine Einspeisegröße ($E_{x,k}$) mithilfe des zumindest einen Stromrichters (1) auf den ermittelten Einspeisegrößen-Sollwert ($E_{x,k}$*) eingestellt wird.

2. Verfahren nach Anspruch 1, **dadurch gekennzeichnet, dass** eine Abweichung der gemessenen zumindest einen Netzgröße ($N_{x,k}$) von einer aufgrund des Modells des Einspeisenetzwerks (4) zu erwartenden Netzgröße ($\tilde{N}_{x,k}$) und damit eine fehlerhafte Beschreibung der Korrelation erkannt und eine Adaption des Modells des Einspeisenetzwerks (4) durchgeführt wird, wenn die Abweichung zwischen einem Messwert der zumindest einen Netzgröße ($N_{x,k}$) und einem mittels des Modells des Einspeisenetzwerks (4) berechneten Schätzwert der zumindest einen Netzgröße ($\tilde{N}_{x,k}$) einen vorgegebenen Schwellwert übersteigt.

3. Verfahren nach Anspruch 1, **dadurch gekennzeichnet, dass** eine Abweichung der gemessenen zumindest einen Einspeisegröße ($E_{x,k}$) von einer aufgrund des Modells des Einspeisenetzwerks (4) zu erwartenden Einspeisegröße ($\tilde{E}_{x,k}$) und damit eine fehlerhafte Beschreibung der Korrelation erkannt und eine Adaption des Modells des Einspeisenetzwerks (4) durchgeführt wird, wenn die Abweichung zwischen einem Messwert der zumindest einen Einspeisegröße ($E_{x,k}$) und einem mittels des Modells des Einspeisenetzwerks (4) berechneten Schätzwert der zumindest einen Einspeisegröße ($\tilde{E}_{x,k}$) einen vorgegebenen Schwellwert übersteigt.

4. Verfahren nach Anspruch 1, **dadurch gekennzeichnet, dass** eine Abweichung der gemessenen zumindest einen Netzgröße ($N_{x,k}$) von einer aufgrund des Modells des Einspeisenetzwerks (4) zu erwartenden Netzgröße ($\tilde{N}_{x,k}$) und/oder eine Abweichung der gemessenen zumindest einen Einspeisegröße ($E_{x,k}$) von einer aufgrund des Modells des Einspeisenetzwerks (4) zu erwartenden Einspeisegröße ($\tilde{E}_{x,k}$) und damit eine fehlerhafte Beschreibung der Korrelation erkannt und eine Adaption des Modells des Einspeisenetzwerks (4) durchgeführt wird, wenn die Abweichung zwischen zwei Messwerten der zumindest einen Netzgröße ($N_{x,k}$, $N_{x,k-d}$) oder die Abweichung zwischen zwei Messwerten der zumindest einen Einspeisegröße ($E_{x,k}$, $E_{x,k-d}$) von zwei unterschiedlichen Zeitpunkten einen vorgegebenen Schwellwert übersteigt.

5. Verfahren nach Anspruch 2, 3 oder 4, **dadurch gekennzeichnet, dass** als vorgegebener Schwellwert ein Relativwert eines zur Ermittlung der Abweichung herangezogenen Messwertes der zumindest einen Einspeisegröße ($E_{x,k}$) oder der zumindest einen Netzgröße ($N_{x,k}$) verwendet wird.

6. Verfahren nach Anspruch 2, 3, oder 4, **dadurch gekennzeichnet, dass als** vorgegebener Schwellwert ein Absolutwert eines zur Ermittlung der Abweichung herangezogenen Messwertes der zumindest einen Einspeisegröße ($E_{x,k}$) oder der zumindest einen Netzgröße ($N_{x,k}$) verwendet wird.

7. Verfahren nach einem der vorhergehenden Ansprüche, **dadurch gekennzeichnet, dass** das elektrische Einspeisenetzwerk (4) zumindest einen unbekannten elektrischen Verbraucher (5, 6) umfasst, welcher zumindest eine elektrische Verbrauchsgröße ($V_{x,k}$) im elektrischen Einspeisenetzwerk (4) hervorruft **und dass** der zumindest eine elektrische Verbraucher (5, 6) sowie die von ihm hervorgerufene Verbrauchsgröße ($V_{x,k}$) im Modell des Einspeisenetzwerks (4) abgebildet werden und somit bei der Ermittlung des zumindest einen Sollwertes ($E_{x,k}$*) für die zumindest eine elektrische Einspeisegröße ($E_{x,k}$) sowie bei der Adaption des Modells des Einspeisenetzwerks (4) berücksichtigt werden.

8. Verfahren nach einem der vorhergehenden Ansprüche, **dadurch gekennzeichnet, dass** sowohl die Ermittlung des Einspeisegrößen-Sollwerts ($E_{x,k}$*) für die zumindest eine Einspeisegröße ($E_{x,k}$) als auch die Adaption des Modells des Einspeisenetzwerks (4) während des Betriebs des Einspeisenetzwerks (4) durchgeführt werden.

9.  Verfahren nach einem der vorhergehenden Ansprüche, **dadurch gekennzeichnet, dass** die zumindest eine Einspeisegröße ($E_{x,k}$) und/oder die zumindest eine Netzgröße ($N_{x,k}$) durch elektrische Leistungsgrößen, wie elektrischem Strom, elektrischer Spannung oder elektrischer Leistung, gegeben sind.

10. Verfahren nach einem der vorhergehenden Ansprüche, **dadurch gekennzeichnet, dass** durch das Einregeln des während des Betriebs ermittelten Sollwertes ($E_{x,k}{}^*$) für die zumindest eine Einspeisegröße ($E_{x,k}$) auch die zumindest eine Netzgröße ($N_{x,k}$) auf den für sie vorgegebenen Sollwert ($N_{x,k}{}^*$) eingestellt wird.

11. Verfahren nach einem der vorhergehenden Ansprüche, **dadurch gekennzeichnet, dass** das Modell des Einspeisenetzwerks (4) zu Beginn des Verfahrens mit einem a priori bekannten Modell oder mit einem neutralen Element initialisiert wird.

12. Anordnung zum Regeln elektrischer Netzgrößen an einem Netzanschlusspunkt (2) an einem Ausgang eines Einspeisenetzwerks (4), welches an einem Eingang des Einspeisenetzwerks (4) an einem Stromrichteranschlusspunkt (8) mit einem Stromrichter (1) verbunden ist, wobei eine erste Messeinrichtung (3) vorgesehen ist, die am Netzanschlusspunkt (2) zumindest eine Netzgröße ($N_{x,k}$) misst, und wobei eine zweite Messeinheit (3) vorgesehen ist, die am Stromrichteranschlusspunkt (8) zumindest eine Einspeisegröße ($E_{x,k}$) misst, **dadurch gekennzeichnet, dass** die Anordnung eine Steuereinheit (7) umfasst, in der ein Modell des Einspeisenetzwerks (4) implementiert ist, das die Korrelation zwischen der zumindest einen Einspeisegröße ($E_{x,k}$) und der zumindest einen Netzgröße ($N_{x,k}$) mittels eines Modells des Einspeisenetzwerks (4) modellhaft beschreibt, **dass**

- die Steuereinheit (7) ausgestaltet ist, im Fall einer Abweichung der gemessenen zumindest einen Netzgröße ($N_{x,k}$) von einer aufgrund des Modells des Einspeisenetzwerks (4) zu erwartenden Netzgröße ($\tilde{N}_{x,k}$) und/oder einer Abweichung der gemessenen zumindest einen Einspeisegröße ($E_{x,k}$) von einer aufgrund des Modells des Einspeisenetzwerks (4) zu erwartenden Einspeisegröße ($\tilde{E}_{x,k}$) eine fehlerhafte Beschreibung der Korrelation zu erkennen und eine Adaption des Modells des Einspeisenetzwerks (4) durchzuführen, um die fehlerhafte Beschreibung der Korrelation durch das Modells des Einspeisenetzwerks (4) zu korrigieren, wobei zur Adaption des Modell des Einspeisenetzwerks (4) zumindest ein Teil der erfassten Messdaten der zumindest einen Einspeisegröße ($E_{x,k}$) und zumindest ein Teil der erfassten Messdaten der zumindest einen Netzgröße ($N_{x,k}$) herangezogen werden,
- **dass** die Steuereinheit (7) ausgestaltet ist, anhand des Modells des Einspeisenetzwerks (4) aus einem vorgegebenen Netzgrößen-Sollwert ($N_{x,k}{}^*$) für die zumindest eine Netzgröße ($N_{x,k}$) ein Einspeisegrößen-Sollwert ($E_{x,k}{}^*$) für die zumindest eine Einspeisegröße ($E_{x,k}$) zu ermitteln,
- **und dass** der Stromrichter (1) ausgestaltet ist, die zumindest eine Einspeisegröße ($E_{x,k}$) auf den ermittelten Einspeisegrößen-Sollwert ($E_{x,k}{}^*$) einzustellen.

**Claims**

1.  A method for controlling electrical network variables ($N_{x,k}$) at a network connection point (2) at an output of a feed network (4) which, at an input of the feed network (4), is connected to at least one power converter (1) at a power converter connection point (8), wherein at the power converter connection point (8) at least one feed variable ($E_{x,k}$) and at the network connection point (2) at least one network variable ($N_{x,k}$) are measured, **characterized in that** the correlation between the at least one feed variable ($E_{x,k}$) and the at least one network variable ($N_{x,k}$) is described in a model-like manner by means of a model of the feed network (4), wherein the model of the feed network (4) is implemented in a control unit (7) of the feed network (4), **in that**

- in the event of a deviation of the measured at least one network variable ($N_{x,k}$) from a network variable ($\tilde{N}_{x,k}$) to be expected based on the model of the feed network (4) and/or a deviation of the measured at least one feed variable ($E_{x,k}$) from a feed variable ($\tilde{E}_{x,k}$) to be expected based on the model of the feed network (4) an erroneous description of the correlation is detected by the control unit (7), and an adaptation of the model of the feed network (4) is carried out by the control unit (7) in order to correct the erroneous description of the correlation by the model of the feed network (4), wherein at least a portion of the detected measurement data of the at least one feed variable ($E_{x,k}$) and at least a portion of the detected measurement data of the at least one network variable ($N_{x,k}$), are used,
- **in that** the control unit (7) determines, by means of the model of the feed network (4) from a predefined network variable target value ($N_{x,k}{}^*$) for the at least one network variable ($N_{x,k}$) a feed variable target value ($E_{x,k}{}^*$) for the at least one feed variable ($E_{x,k}$),

- **and in that** the at least one feed variable ($E_{x,k}$) is set using the at least one power converter (1) to the determined feed variable target value ($E_{x,k}{}^*$).

2. The method according to claim 1, **characterized in that** a deviation of the measured at least one network variable ($N_{x,k}$) from a network variable ($\tilde{N}_{x,k}$) to be expected based on the model of the feed network (4) and thus an erroneous description of the correlation is detected and an adaptation of the model of the feed network (4) is carried out if the deviation between a measured value of the at least one network variable ($N_{x,k}$) and an estimated value of the at least one network variable ($N_{x,k}$) calculated by means of the model of the feed network (4) exceeds a predefined threshold value.

3. The method according to claim 1, **characterized in that** a deviation of the measured at least one feed variable ($E_{x,k}$) from a feed variable ($\tilde{E}_{x,k}$) to be expected based on the model of the feed network (4) and thus an erroneous description of the correlation is detected and an adaptation of the model of the feed network (4) is carried out if the deviation between a measured value of the at least one feed variable ($E_{x,k}$) and an estimated value of the at least one feed variable ($\tilde{E}_{x,k}$) calculated by means of the model of the feed network (4) exceeds a predefined threshold value.

4. The method according to claim 1, **characterized in that** a deviation of the measured at least one network variable ($\tilde{N}_{x,k}$) from a network variable ($N_{x,k}$) to be expected based on the model of the feed network (4) and/or a deviation of the measured at least one feed variable ($E_{x,k}$) from a feed variable ($\tilde{E}_{x,k}$) to be expected based on the model of the feed network (4) and thus an erroneous description of the correlation are detected and an adaptation of the model of the feed network (4) is carried out if the deviation between two measured values of the at least one network variable ($N_{x,k}$, $N_{x,k-d}$) or the deviation between two measured values of the at least one feed variable ($E_{x,k}$, $E_{x,k-d}$) from two different points in time exceeds a predefined threshold value.

5. The method according to claim 2, 3 or 4, **characterized in that,** as a predefined threshold value, a relative value of a measured value used to determine the deviation of the at least one feed variable ($E_{x,k}$) or the at least one network variable ($N_{x,k}$) is used.

6. The method according to claims 2, 3, or 4, **characterized in that,** as a predefined threshold value, an absolute value of a measured value used to determine the deviation of the at least one feed variable ($E_{x,k}$) or of the at least one network variable ($N_{x,k}$) is used.

7. The method according to any of the preceding claims, **characterized in that** the electrical feed network (4) comprises at least one unknown electrical consumer (5, 6), which causes at least one electrical consumption variable ($V_{x,k}$) in the electrical feed network (4) **and in that** the at least one electrical consumer (5, 6) and the consumption variable ($V_{x,k}$) caused by it are modeled in the model of the feed network (4) and thus considered in the determination of the at least one target value ($E_{x,k}{}^*$) for the at least one electrical feed variable ($E_{x,k}$) as well as in the adaptation of the model of the feed network (4).

8. The method according to any of the preceding claims, **characterized in that** both the determination of the feed variable target value ($E_{x,k}{}^*$) for the at least one feed variable ($E_{x,k}$) and the adaptation of the model of the feed network (4) are carried out during operation of the feed network (4).

9. The method according to any of the preceding claims, **characterized in that** the at least one feed variable ($E_{x,k}$) and/or the at least one network variable ($N_{x,k}$) are provided by electrical power variables, such as electrical current, electrical voltage, or electrical power.

10. The method according to any of the preceding claims, **characterized in that** by controlling to the target value ($E_{x,k}{}^*$) determined during operation for the at least one feed variable ($E_{x,k}$), the at least one network variable ($N_{x,k}$) is also set to the specified target value ($N_{x,k}{}^*$).

11. The method according to any of the preceding claims, **characterized in that** the model of the feed network (4) is initialized at the beginning of the method with a model known a priori or with a neutral element.

12. An arrangement for controlling electrical network variables at a network connection point (2) at an output of a feed network (4), which is connected to a power converter (1) at an input of the feed network (4) at a power converter connection point (8), wherein a first measuring device (3) is provided which measures at least one network variable

($N_{x,k}$) at the network connection point (2), and wherein a second measuring unit (3) is provided, which measures at the power converter connection point (8) at least one feed variable ($E_{x,k}$), **characterized in that** the arrangement comprises a control unit (7) in which a model of the feed network (4) is implemented, which model describes in a model-like manner the correlation between the at least one feed variable ($E_{x,k}$) and the at least one network variable ($N_{x,k}$) by means of a model of the feed network (4), **in that**

- the control unit (7) is designed to detect, in the event of a deviation of the measured at least one network variable ($N_{x,k}$) from a network variable ($N_{x,k}$) to be expected based on the model of the feed network (4) and/or a deviation of the measured at least one feed variable ($E_{x,k}$) from a feed variable ($\tilde{E}_{x,k}$) to be expected based on the model of the feed network (4), an erroneous description of the correlation and to carry out an adaptation of the model of the feed network (4) in order to correct the erroneous description of the correlation by the model of the feed network (4), wherein, for adapting the model of the feed network (4), at least a portion of the detected measurement data of the at least one feed variable ($E_{x,k}$) and at least a portion of the detected measurement data of the at least one network variable ($N_{x,k}$) are used,
- **in that** the control unit (7) is designed to determine, by means of the model of the feed network (4), from a predefined network variable target value ($N_{x,c}^*$) for the at least one network variable ($N_{x,k}$), a feed variable target value ($E_{x,k}^*$) for the at least one feed variable ($E_{x,k}$),
- **and in that** the power converter (1) is designed to set the at least one feed variable ($E_{x,k}$) to the determined feed variable target value ($E_{x,k}^*$).

## Revendications

1. Procédé de régulation de grandeurs électriques de réseau ($N_{x,k}$) au niveau d'un point de raccordement au réseau (2) au niveau d'une sortie d'un réseau d'alimentation (4), qui est relié à une entrée du réseau d'alimentation (4) au niveau d'un point de raccordement de convertisseur (8) avec au moins un convertisseur (1), au moins une grandeur d'alimentation ($E_{x,k}$) étant mesurée au niveau du point de raccordement de convertisseur (8) et au moins une grandeur de réseau ($N_{x,k}$) étant mesurée au niveau du point de raccordement de réseau (2), **caractérisé en ce que** la corrélation entre l'au moins une grandeur d'alimentation ($E_{x,k}$) et l'au moins une grandeur de réseau ($N_{x,k}$) est décrite de manière modélisée au moyen d'un modèle du réseau d'alimentation (4), le modèle du réseau d'alimentation (4) étant implémenté dans une unité de commande (7) du réseau d'alimentation (4), **en ce que**

- dans le cas d'un écart de l'au moins une grandeur de réseau ($N_{x,k}$) mesurée par rapport à une grandeur de réseau ($\tilde{N}_{x,k}$) attendue sur la base du modèle du réseau d'alimentation (4) et/ou d'un écart de l'au moins une grandeur d'alimentation ($E_{x,k}$) mesurée par rapport à une grandeur d'alimentation ($\tilde{E}_{x,k}$) attendue sur la base du modèle du réseau d'alimentation (4), l'unité de commande (7) détecte une description erronée de la corrélation et l'unité de commande (7) effectue une adaptation du modèle du réseau d'alimentation (4), afin de corriger la description erronée de la corrélation par le modèle du réseau d'alimentation (4), au moins une partie des données de mesure saisies de l'au moins une grandeur d'alimentation ($E_{x,k}$) et au moins une partie des données de mesure saisies de l'au moins une grandeur de réseau ($N_{x,k}$) étant utilisées pour l'adaptation du modèle du réseau d'alimentation (4),
- **en ce que** l'unité de commande (7) détermine, à l'aide du modèle du réseau d'alimentation (4), à partir d'une valeur de consigne de grandeur de réseau ($N_{x,k}^*$) prédéfinie pour l'au moins une grandeur de réseau ($N_{x,k}$), une valeur de consigne de grandeur d'alimentation ($E_{x,k}^*$) pour l'au moins une grandeur d'alimentation ($E_{x,k}$),
- et **en ce que** l'au moins une grandeur d'alimentation ($E_{x,k}$) est réglée à l'aide de l'au moins un convertisseur (1) à la valeur de consigne de grandeur d'alimentation ($E_{x,k}^*$) déterminée.

2. Procédé selon la revendication 1, **caractérisé en ce qu'**un écart de l'au moins une grandeur de réseau ($N_{x,k}$) mesurée par rapport à une grandeur de réseau ($\tilde{N}_{x,k}$) attendue sur la base du modèle du réseau d'alimentation (4) et donc une description erronée de la corrélation sont détectés et une adaptation du modèle du réseau d'alimentation (4) est effectuée lorsque l'écart entre une valeur de mesure de l'au moins une grandeur de réseau ($N_{x,k}$) et une valeur estimée de l'au moins une grandeur de réseau ($\tilde{N}_{x,k}$) calculée au moyen du modèle du réseau d'alimentation (4) dépasse une valeur seuil prédéfinie.

3. Procédé selon la revendication 1, **caractérisé en ce qu'**un écart de l'au moins une grandeur d'alimentation ($E_{x,k}$) mesurée par rapport à une grandeur d'alimentation ($\tilde{E}_{x,k}$) attendue sur la base du modèle du réseau d'alimentation (4) et donc une description erronée de la corrélation sont détectés et une adaptation du modèle du réseau d'alimentation (4) est effectuée lorsque l'écart entre une valeur de mesure de l'au moins une grandeur d'alimentation

($E_{x,k}$) et une valeur estimée de l'au moins une grandeur d'alimentation ($\tilde{E}_{x,k}$) calculée au moyen du modèle du réseau d'alimentation (4) dépasse une valeur seuil prédéfinie.

4. Procédé selon la revendication 1, **caractérisé en ce qu'**un écart de l'au moins une grandeur de réseau ($N_{x,k}$) mesurée par rapport à une grandeur de réseau ($\tilde{N}_{x,k}$) attendue sur la base du modèle du réseau d'alimentation (4) et/ou un écart de l'au moins une grandeur d'alimentation ($E_{x,k}$) mesurée par rapport à une grandeur d'alimentation ($\tilde{E}_{x,k}$) attendue sur la base du modèle du réseau d'alimentation (4) et donc une description erronée de la corrélation sont détectés et une adaptation du modèle du réseau d'alimentation (4) est effectuée lorsque l'écart entre deux valeurs de mesure de l'au moins une grandeur de réseau ($N_{x,k}$, $N_{x,k-d}$) ou l'écart entre deux valeurs de mesure de l'au moins une grandeur d'alimentation ($E_{x,k}$, $E_{x,k-d}$) de deux moments différents dépasse une valeur seuil prédéfinie.

5. Procédé selon la revendication 2, 3 ou 4, **caractérisé en ce qu'**on utilise comme valeur seuil prédéfinie une valeur relative d'une valeur de mesure de l'au moins une grandeur d'alimentation ($E_{x,k}$) ou de l'au moins une grandeur de réseau ($N_{x,k}$) utilisée pour la détermination de l'écart.

6. Procédé selon la revendication 2, 3, ou 4, **caractérisé en ce qu'**on utilise comme valeur seuil prédéfinie une valeur absolue d'une valeur de mesure de l'au moins une grandeur d'alimentation ($E_{x,k}$) ou de l'au moins une grandeur de réseau ($N_{x,k}$) utilisée pour la détermination de l'écart.

7. Procédé selon l'une des revendications précédentes, **caractérisé en ce que** le réseau d'alimentation électrique (4) comprend au moins un consommateur électrique inconnu (5, 6) qui provoque au moins une grandeur de consommation électrique ($V_{x,k}$) dans le réseau d'alimentation électrique (4) et **en ce que** l'au moins un consommateur électrique (5, 6) ainsi que la grandeur de consommation ($V_{x,k}$) qu'il provoque sont représentés dans le modèle du réseau d'alimentation (4) et sont ainsi pris en compte lors de la détermination de l'au moins une valeur de consigne ($E_{x,k}^*$) pour l'au moins une grandeur d'alimentation électrique ($E_{x,k}$) ainsi que lors de l'adaptation du modèle du réseau d'alimentation (4).

8. Procédé selon l'une des revendications précédentes, **caractérisé en ce que** tant la détermination de la valeur de consigne de la grandeur d'alimentation ($E_{x,k}^*$) pour l'au moins une grandeur d'alimentation ($E_{x,k}$) que l'adaptation du modèle du réseau d'alimentation (4) sont effectuées pendant le fonctionnement du réseau d'alimentation (4).

9. Procédé selon l'une quelconque des revendications précédentes, **caractérisé en ce que** l'au moins une grandeur d'alimentation ($E_{x,k}$) et/ou l'au moins une grandeur de réseau ($N_{x,k}$) sont données par des grandeurs de puissance électrique, telles que le courant électrique, la tension électrique ou la puissance électrique.

10. Procédé selon l'une des revendications précédentes, **caractérisé en ce que,** par le réglage de la valeur de consigne ($E_{x,k}^*$) déterminée pendant le fonctionnement pour l'au moins une grandeur d'alimentation ($E_{x,k}$), on règle également l'au moins une grandeur de réseau ($N_{x,k}$) à la valeur de consigne ($N_{x,k}^*$) prédéfinie pour celle-ci.

11. Procédé selon l'une des revendications précédentes, **caractérisé en ce que** le modèle du réseau d'alimentation (4) est initialisé au début du procédé à l'aide d'un modèle connu a priori ou d'un élément neutre.

12. Dispositif de régulation de grandeurs électriques de réseau au niveau d'un point de raccordement au réseau (2) au niveau d'une sortie d'un réseau d'alimentation (4), qui est relié à une entrée du réseau d'alimentation (4) au niveau d'un point de raccordement de convertisseur (8) avec au moins un convertisseur (1), un premier dispositif de mesure (3) étant prévu, qui mesure au moins une grandeur de réseau ($N_{x,k}$) au niveau du point de raccordement au réseau (2) et une seconde unité de mesure (3) étant prévue, qui mesure au moins une grandeur d'alimentation ($E_{x,k}$) au point de raccordement de convertisseur (8), **caractérisé en ce que** le dispositif comprend une unité de commande (7) dans laquelle est implémenté un modèle du réseau d'alimentation (4) qui décrit de manière modélisée la corrélation entre l'au moins une grandeur d'alimentation ($E_{x,k}$) et l'au moins une grandeur de réseau ($N_{x,k}$) au moyen d'un modèle du réseau d'alimentation (4), **en ce que**

- l'unité de commande (7) est conçue pour, dans le cas 'd'un écart de l'au moins une grandeur de réseau ($N_{x,k}$) mesurée par rapport à une grandeur de réseau ($\tilde{N}_{x,k}$) attendue sur la base du modèle du réseau d'alimentation (4) et/ou d'un écart de l'au moins une grandeur d'alimentation ($E_{x,k}$) mesurée par rapport à une grandeur d'alimentation ($\tilde{E}_{x,k}$) attendue sur la base du modèle du réseau d'alimentation (4), détecter une description erronée de la corrélation et effectuer une adaptation du modèle du réseau d'alimentation (4) afin de corriger la description erronée de la corrélation par le modèle du réseau d'alimentation (4), au moins une partie des données de mesure saisies de l'au moins une grandeur d'alimentation ($E_{x,k}$) et au moins une partie des données de mesure saisies de l'au moins une grandeur de réseau ($N_{x,k}$) étant utilisées pour l'adaptation du modèle du réseau d'alimentation (4),

- **en ce que** l'unité de commande (7) est conçue pour déterminer, à l'aide du modèle du réseau d'alimentation (4), à partir d'une valeur de consigne de grandeur de réseau ($N_{x,k}$*) prédéfinie pour l'au moins une grandeur de réseau ($N_{x,k}$), une valeur de consigne de grandeur d'alimentation ($E_{x,k}$*) pour l'au moins une grandeur d'alimentation ($E_{x,k}$),

- et **en ce que** le convertisseur (1) est conçu pour régler l'au moins une grandeur d'alimentation ($E_{x,k}$) à la valeur de consigne de grandeur d'alimentation ($E_{x,k}$*) déterminée.

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014200412 A1
- DE 102018124124 B3
- DE 102018116444 A1
- EP 3429050 A1
- DE 102018129810 A1
- EP 3376026 A1